(19) Europäisches Patentamt
European Patent Office
Office européen des brevets

(11) EP 1 657 713 A2

(12) EUROPEAN PATENT APPLICATION

(43) Date of publication:
17.05.2006 Bulletin 2006/20

(51) Int Cl.:
*G11B 7/005* (2006.01) *G11B 27/19* (2006.01)

(21) Application number: **05110256.4**

(22) Date of filing: **02.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **11.11.2004 JP 2004328023**

(71) Applicant: **KABUSHIKI KAISHA TOSHIBA**
**Tokyo 105-8001 (JP)**

(72) Inventors:
- **Ogawa, Akihito**
  **Toshiba Corporation I.P.D.**
  **105-8001, Tokyo (JP)**
- **Nagai, Yuji**
  **Toshiba Corporation I.P.D.**
  **105-8001, Tokyo (JP)**

(74) Representative: **Henkel, Feiler & Hänzel**
**Möhlstrasse 37**
**81675 München (DE)**

(54) **Method of evaluating the quality of a wobble address signal of a recording medium**

(57) In an information recording medium evaluating method of evaluating an information recording medium in which the address of a guide groove (G) wobbling at a specific frequency is recorded by modulating the wobble of the guide groove (G), an address reproduction error rate is estimated from both of the amount of fluctuation in the amplitude of a wobble signal and the signal-to-noise ratio (SNR), a specific range with a low error rate is set, and it is determined whether the error rate is within the specific range.

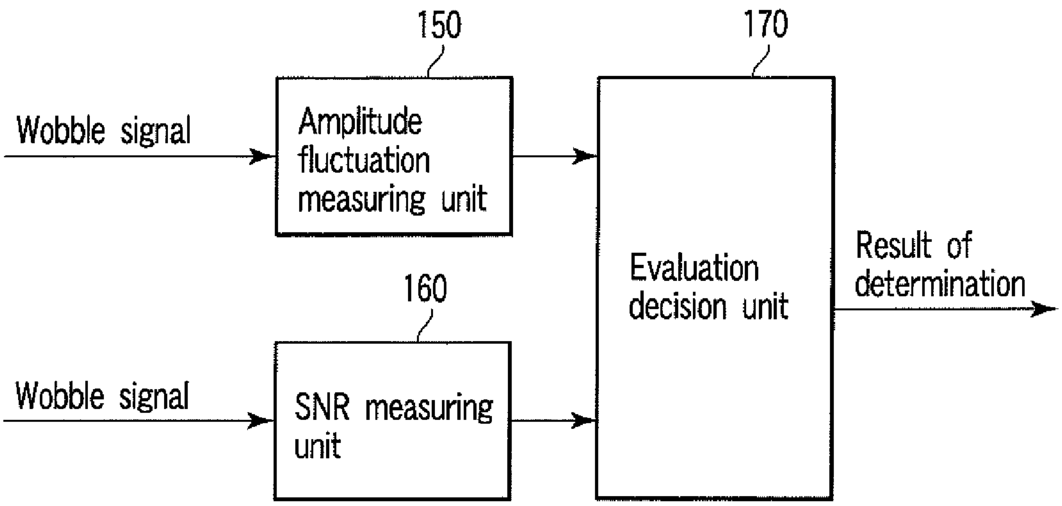


F I G. 1 B

EP 1 657 713 A2

## Description

This invention relates to an information recording medium, such as an optical disk, a method of and apparatus for evaluating an information recording medium, and an information recording medium manufacturing method.

As is generally known, an optical disk whose one-sided single layer has a capacity of 4.7 GB has been put to practical use as an optical disk capable of high-density information recording. One of such optical disks is rewritable +RW (ECMA-337).

In these optical disks, an information recording layer is formed on a transparent substrate. A laser beam is gathered onto the recording layer, thereby recording and reproducing information. The information recording layer of an optical disk has guide grooves as means for recording and reproducing information. Information is recorded or reproduced along the guide grooves. In addition, to specify a special position at which information is recorded or reproduced, a physical address is formed.

Specifically, in +RW, groove wobble modulation (hereinafter, referred to wobble modulation) that vibrates the guide groove minutely in the radial direction is used as means for forming a physical address. This is a method of changing the phase of a wobble in such a manner that the phase corresponds to the information to be recorded. Physical addresses in wobble modulation have the advantages that, since the recording track is not cut off, the area in which user information is recorded is wide, that is, the format efficiency is high, and the interchangeability with a reproduce-only medium is easier.

In addition, an indicator for evaluating the quality of the wobble signal optically reproduced from the groove wobbles is the Narrow Band Signal-to-Noise Ratio (NBSNR) of the wobble signal. The indicator is used to evaluate the ratio of the amplitude of the noise (or noise level) to the amplitude (or carrier level) of a carrier carrying the wobble signal. The higher NBSNR is, the higher the demodulation rate of the information read from the wobble signal becomes. The NBSNR may be simply referred to as SNR or Carrier to Noise Ratio (CNR).

Generally, NBSNR of the wobble signal is measured by inputting the wobble signal to a frequency component analyzer, such as a spectrum analyzer, and finding the difference between the peak value of the carrier frequency and the noise level near the carrier frequency. If the wobble signal has modulated components, the peak value of the carrier frequency is smaller than the actual value. Moreover, depending on the frequency of the modulated component, the level near the carrier frequency rises. Therefore, when the wobble signal has the modulated component, NBSNR of the wobble signal cannot be measured accurately.

On the other hand, since in +RW, there are two kinds of wobble signals, one from an unmodulated area and the other from a modulated area. Most of the wobble signal belongs to the unmodulated area, NBSRN of the wobble signal can be measured, almost ignoring the modulated component.

However, as the modulated area is decreased, the capacity of recordable information decreases. Therefore, when the recording capacity of information in wobble modulation is increased, the method cannot be used.

In contrast, in the earlier Jpn. Pat. Appln. KOKAI Publication No. 2004-280878 filed by the inventors of this invention, the wobble signal is squared, thereby removing the modulated component, which makes it possible to measure NBSNR accurately.

However, in an optical disk using the CVL (Constant linear velocity) format in which the physical length of a wobble used in this specification is constant over a part or all of the disk, the modulated component remains after the squaring of the wobble signal due to wobble crosstalk from adjacent tracks, which causes the problem of being unable to measure NBSNR accurately. Moreover, since the demodulation rate of the information read from the wobble signal changes depending on not only NBSNR but also the amount of wobble crosstalk, this causes another problem: evaluating only NBSNR makes it impossible to estimate the demodulation rate of the information read from the wobble signal.

An object of the present invention is to provide a method of and apparatus for evaluating an information recording medium using an indicator for evaluating the accurate performance of a modulated wobble signal, a highly-reliable information recording medium optimized using the method and apparatus, and a method of and apparatus for manufacturing an information recording medium optimized using the method and apparatus.

According to an aspect of the present invention, there is provided an information recording medium evaluating method of evaluating an information recording medium in which the address of a guide groove wobbling at a specific frequency is recorded by modulating the wobble of the guide groove, the information recording medium evaluating method comprising: estimating an address reproduction error rate from both of the amount of fluctuation in the amplitude of a wobble signal and the signal-to-noise ratio (SNR); setting a specific range with a low error rate; and determining whether the error rate is within the specific range.

This summary of the invention does not necessarily describe all necessary features so that the invention may also be a sub-combination of these described features.

The invention can be more fully understood from the following detailed description when taken in conjunction with the accompanying drawings, in which:

FIG. 1A is a block diagram showing the configuration of an optical disk apparatus according to an embodiment of the present invention;
FIG. 1B is a block diagram showing the configuration of an evaluating unit as an embodiment of the present invention;
FIG. 2 shows a 4-quadrant photodetector related to the present invention;
FIG. 3 is a diagram to help explain tracks on the optical disk related to the present invention;
FIG. 4 is an enlarged view of tracks on the optical disk according to the present invention;
FIGS. 5A to 5D are explanatory diagrams of tracks viewed from above and reproduced signals obtained when the optical disk is played on the optical disk apparatus;
FIG. 6 shows an example of wobble phase modulation;
FIG. 7 is a diagram to help explain a symbol is composed of a 4-wave wobble;
FIG. 8 shows the relationship between wobble phases for each round of the track;
FIGS. 9A to 9C show various kinds of a wobble signal reproduced;
FIG. 10 shows an example of the configuration of a wobble signal amplitude measuring unit;
FIG. 11 shows an example of the output of a frequency characteristic analyzer;
FIG. 12 is an enlarged view of a part of the signal waveform of FIG. 11;
FIG. 13 is a diagram to help explain the relationship between a 4-track-period gate signal, the output of the frequency characteristic analyzer, and the detected maximal value and minimal value with respect to the time axis;
FIG. 14 is a flowchart to help explain an example of the wobble signal amplitude evaluating method;
FIG. 15 is a diagram to help explain the result of measuring Wppmax/Wppmin when the resolution bandwidth (RBW) of the frequency characteristic analyzer was changed;
FIGS. 16A to 16C show examples of the output of the frequency characteristic analyzer when the video band width (VBW), that is, the cutoff frequency of the vide filter of the frequency characteristic analyzer, was changed;
FIG. 17 shows an example of the configuration of a squared wobble signal NBSNR evaluating unit as an embodiment of the present invention;
FIGS. 18A and 18B are diagrams to help explain a squared wobble frequency characteristic without a crosstalk and that with a crosstalk;
FIG. 19 is a flowchart to help explain a method of measuring NBSNR of a squared wobble signal according to an embodiment of the present invention;
FIG. 20 is a diagram to help explain a noise level measuring range related to the present invention;
FIGS. 21A and 21B are diagrams to help explain the result of measuring the carrier level with a unit which evaluates NSBNR of the squared wobble signal;
FIG. 22 is a diagram to help explain the address format of the optical disk according to the present invention;
FIG. 23 schematically shows the configuration of address demodulation circuit;
FIG. 24 is a diagram to help explain the result of measuring NBSNR of the squared wobble signal (the abscissa axis) and the address information reading error rate (or address error rate) (the ordinate axis) when the optical disk was evaluated by the evaluating method of the present invention;
FIG. 25 is a diagram obtained by extracting the values of Wppmax/Wppmin and NBSNR at the time of an address error rate of $1.0 \times 10^{-3}$ from the result of the measurement of FIG. 24 and plotting the extracted values;
FIG. 26 shows the configuration of a mastering apparatus for manufacturing disks; and
FIG. 27 is a flowchart to help explain the disk manufacturing steps.

Hereinafter, referring to the accompanying drawings, an embodiment of the present invention will be explained.

Explanation of Optical Disk Apparatus

FIGS. 1A and 1B show examples of the configuration of an optical disk apparatus and that of an optical disk evaluating unit according an embodiment of the present invention. The optical disk apparatus of the present invention focuses or condenses a laser beam emitted from a pickup head (hereinafter, referred to as PUH) 111 on the information recording layer of an optical disk 100, thereby recording or reproducing information. The light reflected by the disk 100 passes through the optical system of the PUH 111 again and is detected as an electric signal at a photodetector (hereinafter, referred to as PD) 112.

The PD 112 is divided into two or more elements. A signal obtained by adding the outputs of the individual elements is called a sum signal. The signal obtained by subtracting the outputs of the individual elements is called a difference signal. A sum signal to which high-frequency information, including user information, is particularly called an RF signal. Moreover, a signal obtained by subtracting the outputs of the elements optically arranged in the radial direction on the optical disk 100 is called a radial push-pull signal.

FIG. 1B schematically shows the configuration of an information recording medium (optical disk) evaluating unit explained in detail later. This unit may be configured independently or be integrated with an address signal processing circuit 116 and a controller 121. The evaluating unit is composed of an amplitude fluctuation measuring unit 150, an SNR measuring unit 160, and an evaluation decision unit 170.

FIG. 2 shows an example of the 4-quadrant PD 112. A signal obtained by adding all of the outputs of the four elements A, B, C, and D is a sum signal. A signal obtained by adding the outputs of two elements and then subtracting these sum signals from each other is a difference signal. In FIG. 2, the outputs of the elements A and B are added at an adder 112a and the outputs of the elements C and D are added at an adder 112b. The outputs of the adders 112a, 112b are input to an adder 112c, which produces a sum signal (I1+I2). The outputs of the adders 112a, 112b are input to a subtracter 112d, which produces a difference signal (I1-I2).

The detected electric signal is amplified by a preamplifier 113 shown in FIG. 1, which outputs the amplified signal to a servo circuit 114, an RF signal processing circuit 115, and an address signal processing circuit 116.

The servo circuit 114 generates servo signals, including focus, tracking, and tilt, and outputs these servo signal to a focus actuator, a tracking actuator, and a tilt actuator of the PUH 111, respectively.

The RF signal processing circuit 115 processes mainly the sum signal among the detected signals, thereby reproducing information, such as the recorded user information. The demodulation method in this case includes a slice method and a PRML (Partial Response Maximum Likelihood) method.

The address signal processing circuit 116 processes the detected signals, reads physical address information indicating the recording position on the optical disk 100, and outputs the physical address information to a controller 121. On the basis of the address information, the controller 121 controls the individual blocks to read information on the user information or the like at the desired position or record information, such as user information, in the desired position.

At this time, a recording signal processing circuit 117 modulates the user information into a signal suitable to optical disk recording. For example, such a modulation rule as (1, 10)RLL or 2(2, 10)RLL is applied. The modulated signal from the recording signal processing circuit 117 controls a laser disk unit (hereinafter, referred to LDD) 111. This causes the laser beam output from the PUP 111 to be controlled according to the recoding signal.

## Optical Disk

In an optical disk according to the present invention, an information recording layer is provided on a transparent substrate. The information recording layer is divided into a plurality of areas, one of which is an information recording area. In the information recording area, a guide groove referred to as a groove is made. The guide groove is called a track. Information is recorded or reproduced along the track.

FIG. 3 shows a track. There are a spiral track type which is continuous from the inner edge to the outer edge as shown in FIG. 3 and a concentric track type which is composed of a plurality of concentric circles.

## Groove Shape

FIG. 4 shows an enlarged view of tracks. A track is composed of a concavity and convexity of an information recording layer, one called a groove and the other called a land. Information may be recorded on either a groove or a land. Explanation will be given, provided that information is recorded on a groove. A groove has a wobble structure which snakes a little in the radial direction. In an optical disk of the present invention, the wobble is further subjected to phase modulation or the like, thereby recording physical address information indicating a physical position in the information recording area and disk unique information.

## Push-Pull Signal (Tracking Error Signal/Wobble Signal)

FIGS. 5A to 5D show tracks viewed from above and reproduced signals obtained when the optical disk is played on the optical disk apparatus. When focus control is turned on while the laser beam is irradiated onto the optical disk, the laser beam is focused on the information recording face of the optical disk. When tracking control is not performed, the beam spot gathered as shown in FIG. 5A is scanned across groove G so that the light reflecting the groove structure comes back to the PD 112. At this time, the radial push-pull signal takes the shape of a sine wave as shown in FIG. 5B. The center of the groove width is at 0V. For example, this signal is used in tracking control. When the signal is used in tracking control, since the high-frequency band signal components become noise, the high frequencies must be cut off. For example, the signal is caused to pass through a $1^{st}$ order low-pass filter with a cutoff frequency of 30 kHz. Such a signal is called a tracking channel signal or a tracking error signal. The amplitude of a tracking error signal changes according to the depth of a groove in the disk, the track pitch, the shape of the condensed beam of the reproducing apparatus, or the like. Here, let the amplitude of the tracking error signal be $(I1\text{-}I2)_{PP}$.

The peak to peak amplitude of $(I1\text{-}I2)_{PP}$ can be measured accurately by following steps. In the first step, the radial push-pull signal is faltered by $1^{st}$ order low pass filter with a cut-off frequency 30 kHz. In the second step measure the peak to peak amplitude of the output signal from the low pass filter for every track. And accumulate equal to or more than 30 samples. In the third step, get $(I1\text{-}I2)_{PP}$ by averaging the samples. The amplitude of $(I1\text{-}I2)_{PP}$ is changed in each track and the changing caused by the track pitch or depth variation, unevenness of medium or so on. The averaging the more than 30 measured values leads a accurate result because most of all changing period is within several tracks.

Next, when tracking control is turned on using the tracking error signal, the tracking control circuit controls the actuator so that the tracking error signal may be at 0 constantly. As a result, the condensed beam follows the groove or the land track and ideally scans the center of the track. At this time, since the groove wobble frequency is sufficiently higher than the control band of tracking control, the beam spot goes straight in the center of the track as shown in FIG. 5C, regardless of the wobble. Here, since the beam reflecting the groove structure comes back to the PD 112, the difference signal changes according to the wobble of the groove, producing a signal as shown in FIG. 5D. This signal is called a wobble signal.

The wobble signal is used for adjusting the rotation frequency of the spindle, referring to the recording clock, storing (or recording) the physical address information, and the like. Since the wobble signal is output as a signal corresponding to the wobble shape of the groove, if the wobble is caused to have a sine wave structure, the wobble signal takes the form of a sine wave. If the wobble is caused to have a saw-tooth structure, the wobble signal also takes the form of a saw-tooth wave. Moreover, if the wobble is phase-modified, phase modulation components appear in the signal.

FIG. 6 shows an example of wobble phase modulation as an embodiment of the present invention. A part of the wobbles in FIG. 6 are phase-modulated. The remaining part is an unmodulated area. The modulated area is divided into four symbols.

As shown in FIG. 7, a symbol is composed of a four-wave wobble. There are prepared two kinds of symbols with a 180° phase shift between them. One of them is called NPW (Normal Phase Wobble) and the other is called IPW (Inverted Phase Wobble). In the modulated area, the begin symbol is fixed to IPW as a synchronizing signal (SYNC). In the unmodulated area, all of the wobbles are NPW. From Data 1 to Data 3, either IPW or NPW is selected, depending on the data.

Concrete Configuration of Optical Disk

Next, a concrete structure of an optical disk according to an embodiment of the present invention will be explained. In the optical disk according to the invention, for example, the track pitch is 0.4 $\mu$m, the data channel pit length is 0.102 $\mu$m, the wobble period is 93 $\times$ the channel bit length. In addition, NA of the objective of the optical system of the optical disk apparatus for playing the optical disk is 0.65, the laser wavelength is 405 nm, and the rotation linear velocity of the spindle motor is 6.61m/s. Therefore, the wobble frequency is $6.61/(0.102/1000 \times 93) = 697000$ Hz = 697 kHz. As shown in FIG. 6, the wobble modulated area is provided for 16 wobbles out of 84 wobbles. A symbol corresponding to one bit of information to be recorded in a wobble signal is composed of 4 wobbles. Although the shape of a wobble is not necessarily limited to this, explanation will be given using this value unless otherwise specified.

Fluctuation in the Amplitude of Wobble Signal

Next, the wobble shape of an optical disk according to the present invention and the reproduced signal will be explained in detail. In the optical disk of the invention, the period of one wobble (meander) is the same all over the information recording area or in a specific range. Moreover, wobbles of a sine wave structure have been phase-modulated on the basis of physical address information indicating physical positions in the information recording area or the disk unique information. Thus, when the range is reproduced at a constant linear velocity (CLV), a wobble reproduced signal whose phase changes at a specific frequency is obtained.

FIG. 8 shows the relationship between wobble phases for each round of the track. In the optical disk 100 with a circular track structure, the length of one round becomes a little longer as the track gets closer to the outer edge. The amount depends on the track pitch. The increment in the length of one round when the track shifts one track outward is ($2 \times \pi \times$ track pitch). Since the period of one wobble is constant, the phases of the wobbles of adjacent tracks shift gradually from one another as the track moves forward.

Furthermore, since the amount of phase shift is ($2 \times \pi \times$ track pitch) for one round of the disk, the phase conditions for adjacent tracks are applied once in the period of (wobble period/($2 \times \pi \times$ track pitch)) tracks. If the wobble period is $93 \times 0.102$ $\mu$m and the track pitch is 0.4 $\mu$m, the phase conditions are applied once in the period of 3.77 rounds of track.

On the other hand, when the condensed beam spot is not sufficiently smaller than the track, the skirts of the beam overlap with the adjacent tracks. As a result, not only the wobble signal of the track being reproduced but also the crosstalk components from the adjacent tracks are added to the reproduced signal. If the wobble phases of the adjacent tracks are close to the phase of the reproduced track, the apparent amplitude of the reproduced wobble signal becomes larger. If the wobble phases of the adjacent tracks are opposite to the reproduced track (or are out of phase with the phase of the reproduced track by 180 degrees), the amplitude of the reproduced wobble signal becomes smaller.

FIGS. 9A, 9B, and 9C show reproduced wobble signals. FIG. 9A shows an envelope of an observed wobble signal. FIG. 9B shows a wobble signal at a minimal position of an NPW signal as in area A. FIG. 9C shows a wobble signal at a maximal position of an NPW signal as in area B. Here, let the smallest wobble signal amplitude be Wppmin and let the largest wobble signal amplitude be Wppmax. As shown in FIG. 9A, the amplitude of the NPW signal fluctuates in the period of (wobble period/(2 × π × track pitch)) rounds of track. The magnitude of the fluctuation becomes larger as the crosstalk is larger and becomes smaller as the crosstalk is smaller. Since the crosstalk is large when the fluctuation is large, the addresses of the reproduced tracks are liable to be demodulated erroneously. Since the crosstalk is small when the fluctuation is small, the addresses of the reproduced tracks are less liable to be demodulated erroneously. Therefore, measuring the magnitude of the fluctuation makes it possible to evaluate the quality of the recording and reproducing of a wobble modulated signal, such as address information. Specifically, evaluation is made by measuring and calculating the value represented by expression (1).

Expression 1

$$\frac{W_{pp(max)}}{W_{pp(min)}} \qquad (1)$$

Wobble Signal Amplitude (Evaluating Unit/Evaluating Method)

FIG. 10 shows the configuration of a wobble signal amplitude measuring unit. The wobble signal amplitude measuring unit according an embodiment of the present invention comprises an optical disk reproducing apparatus 301, a frequency characteristic analyzer 302 for analyzing the frequency characteristic of the wobble signal, and a Wpp measuring unit 303 for measuring Wppmax and Wppmin from the analyzed frequency characteristic. The spectrum analyzer can be used as the frequency characteristic analyzer. The optical disk apparatus 301 outputs not only a wobble signal but also a pulse signal which synchronizes with one revolution of the disk and is generated each time the disk makes one revolution. Generally, a spectrum analyzer is used as the frequency characteristic analyzer 302. Table 1 lists the parameter setting values of the spectrum analyzer.

Table 1

| Item | Setting value | Optimum value |
|---|---|---|
| Center frequency | Wobble frequency | 697 kHz |
| Frequency range (span) | 0 Hz | 0 Hz |
| Resolution bandwidth | About 0.5% to 2% of the wobble frequency | 10 kHz |
| Video bandwidth | About two to ten times the fluctuation frequency | 30 Hz |

The center frequency for measurement is set to the average frequency of the wobble signal. The frequency range (span) is set to 0 Hz. The resolution band is set to a frequency in the range of about 0.5% to 2% of the wobble frequency. If the resolution band is too narrow, when the set center frequency differs from the actual wobble frequency due to a fluctuation in the revolution or the like, the wobble signal deviates from the filter of the frequency characteristic analyzer. If the resolution band is too wide, the noise components unrelated to the wobble signal are accumulated and the resulting signal is regarded as a wobble signal. Therefore, a frequency in the range of about 0.5% to 2% of the wobble frequency is desirable.

The video bandwidth, which is used to remove the noise components of the result of the measurement, is set to a frequency two to ten times as high as the amplitude fluctuation component to be measured. Since the modulation component contributes to an error in the measurement, it is desirable that the video bandwidth should be set to a band sufficiently lower than the frequency band of the modulation component (or (the wobble frequency/the number of wobbles in one symbol) = 174 kHz) and higher than the frequency of the fluctuation component to be measured (or (the rotation frequency of the disk)/3.77 ≒ 10 Hz). A Wpp measuring unit 302 generates a gate signal, measures a minimal value and a maximal value of each wave of the wobble amplitude fluctuation, and calculates the maximum value and minimum value of the wobble amplitude fluctuation by averaging the measurements of the minimal values and maximal values of the individual waves. Since a fluctuation in the amplitude of the wobble signal changes in the period of (wobble period/(2 × π × track pitch)) = 3.77 rounds of track, the interval of the gate signal has to be made longer than the period. To simplify the process, it is desirable that the gate interval should be synchronized with a pulse signal generated each time one revolution is made. Moreover, when the interval of the gate signal is rounded up to an integral multiple of one revolution period of track, it is possible to simplify the creation of a gate, while securing the accuracy of the measurement. For example, when the fluctuation period of the wobble signal amplitude is 3.77 rounds of track, the gate interval is set to 4 revolution period of track. If the gate interval is shorter than the fluctuation period, one fluctuation wave cannot fit in the gate, which makes it impossible to determine a minimal value and a maximal value. If the gate interval is longer than the fluctuation period, a plurality of waves fit in the gate, which makes it impossible to determine the maximal value and minimal value of each wave by a measuring method of detecting the peak and bottom values explained later.

FIG. 11 shows the output of the frequency characteristic analyzer 302. Since the frequency characteristic analyzer 302 sets the frequency range to 0 Hz, it functions as a single narrow band filter whose input signal is specified by the resolution band and the center frequency. Therefore, the output of the analyzer shows amplitude information about the signal specified by the center frequency, that is, amplitude information about the wobble signal. If the output of the frequency characteristic analyzer 302 is Cw[dBm], the actual wobble signal amplitude Wpp[V] is given by the following equation (2):

Equation 2

$$W_{pp(max\ or\ min)} = \left\{ 8 \times R \times 10^{\left(\frac{Cw(max\ or\ min)}{10} - 3\right)} \right\}^{\frac{1}{2}} (V) \quad (2)$$

where R is the terminal resistance of the input stage of the frequency characteristic analyzer. R is generally 50Ω.

Furthermore, since the output is caused to pass through a relatively wide band video filter specified by the video bandwidth, the temporally short amplitude fluctuation components generated in modulation or the like have been removed. As seen from FIG. 11, the amplitude of the wobble signal fluctuates almost in a constant period.

FIG. 12 is an enlarged view of FIG. 11. Vertical dotlines show the interval of one rounds of track. It is seen that the amplitude of the wobble signal fluctuates in the period of about 4 rounds of track. The evaluating method of the present invention is characterized of measuring the peak value and bottom value of each wave in the amplitude fluctuation in the form of a maximal value and a minimal value, averaging the results to determine the maximum value and minimum value of the entire amplitude fluctuation, and evaluating the amount of fluctuation in the average amplitude of the disk. Since the amplitude fluctuates in a specific period determined by the wobble period and track pitch, the measuring gate is opened in synchronization with the fluctuation, detecting the peak value in each gate. The peak value is used as a maximal value. Similarly, the bottom value is detected in each gate. The bottom value is used as a minimal value. As a result, the Wpp measuring unit 303 can be configured if there are provided a gate generating mechanism, a peak detecting mechanism, a bottom detecting mechanism, and an output averaging mechanism.

FIG. 13 shows a 4-track-period gate signal, the output of the frequency characteristic analyzer 302, and detected maximal values and minimal values. Each of the detected maximal values is represented as Cwmax(i) and each of the detected minimal values is represented as Cwmin(i).

FIG. 14 is a flowchart to help explain the wobble signal amplitude evaluating method. In a first step, the wobble signal output from the optical disk apparatus 301 is input to the frequency characteristic analyzer 302. At this time, when there are a plurality of difference signal outputs from the optical disk apparatus 301, it is verified for subsequent calibration that the gains of the individual circuits are equal. This can be done by making sure that the amplitudes of the reproduced signals from the same disk are the same (STEP 1).

In a second step, the parameters of the frequency characteristic analyzer 302 are set to the values listed in Table 1 (STEP 2).

In a third step, the rotation linear velocity of the disk motor or the set center frequency of the frequency characteristic analyzer 302 is fine-adjusted so that the wobble average frequency may coincide with the set center frequency of the frequency characteristic analyzer 302 (STEP 3). If the average frequency and the set center frequency do not coincide with each other, the center of the wobble signal deviates from the narrow band filter of the frequency characteristic analyzer 302, causing a problem: the measured wobble signal amplitude is smaller than the actual amplitude.

In a fourth step, the Wpp measuring unit 303 generates a gate signal at intervals of 4 rounds of track. Moreover, in each gate, the peak value and bottom value of the output from the frequency characteristic analyzer are measured as Cwmax(i) and CWmin(i) (STEP 4).

In a fifth step, the measured Cwmax(i) and CWmin(i) for 30 points are averaged. Let the results be Cwmax and Cwmin, respectively (STEP 5). The averaging enables extreme changes in Cwmax(i) and CWmin(i) due to local defects or noise to be removed, which makes it possible to evaluate the average characteristic of the disk.

In a sixth step, the measured Cwmax(i) is substituted into Cw in equation (2), thereby calculating Wpp. Let this value be Wppmax. Similarly, the measured Cwmin(i) is substituted into Cw in equation (2), thereby calculating Wpp. Let this value be Wppmin (STEP 6).

In the final step, the calculated Wppmax and Wppmin are substituted into expression (1), thereby obtaining the result of evaluating the wobble amplitude fluctuation (STEP 7).

Validity of the setting value for the wobble signal amplitude evaluating unit

Next, the validity of the setting values listed in Table 1 will be explained. FIG. 15 shows the result of measuring Wppmax/Wppmin when the resolution bandwidth (RBW) of the frequency characteristic analyzer was changed. The signal input to the frequency characteristic analyzer is a wobble signal whose Wppmax/Wppmin has become stable at 2. As seen from the result of the measurement, when RBW is at 1 kHz narrower than 0.5% of the wobble frequency of 697 kHz, the result of the measurement is much larger than 2, which indicates that the measurement was not made properly. When RBW has exceeded 30 kHz larger than 2% of the wobble frequency of 697 kHz, the result of the measurement is smaller than 2. The reason is that, since the noise component is added to the result of measuring the frequency characteristic, when Cwmin is measured, the measured Cwmin is larger than the actual one.

FIGS. 16A to 16C show the outputs of the frequency characteristic analyzer when the video bandwidth (VBW), that is, the cutoff frequency of the vide filter of the frequency characteristic analyzer, was changed. When WBW is 10 Hz smaller than twice the fluctuation frequency of about 10 Hz, the high-frequency components are suppressed, with the result that a fluctuation in the measured wobble amplitude is smaller than the actual one. Conversely, when VBW is set to 300 Hz higher than ten times the fluctuation frequency of 10 Hz, noise is removed insufficiently, permitting noise with a partially large amplitude to enter, which makes it difficult to measure a maximal value and minimal value of the amplitude fluctuation by detecting the peak and bottom values.

These results have shown that the setting values in Table 1 are the optimum values for measuring a fluctuation in the amplitude of a wobble signal.

Wobble Signal S/N (Description/Evaluating Unit/Evaluating Method)

FIG. 17 shows the configuration of a squared wobble signal NBSNR evaluating unit as an embodiment of the present invention. A wobble signal is input via a low-noise amplifier 501 and a band-pass filter 502 to a squaring circuit 503. The wobble signal is squared and the resulting signal is input to a frequency measuring circuit (or frequency characteristic analyzer) 502. At this time, the parameters of the frequency characteristic analyzer 502 are set to the values listed in Table 2. Moreover, an NBSNR measuring unit 505 measures the carrier level and noise level from the frequency characteristic and determines NBSNR using equation (3). The carrier level is measured at a frequency twice the center frequency of the wobble signal before the wobble signal is squared.

$$\text{NBSNR [dB]} = \text{Carrier Level [dBm]} - \text{Noise Level [dBm]} \quad (3)$$

Table 2

| Item | Setting value | Optimum value |
|---|---|---|
| Center frequency | Twice the wobble frequency | 1.39 MHz |
| Frequency range (span) | 500 kHz or higher | 500 kHz |
| Resolution bandwidth | 10 kHz | 10 kHz |
| Video bandwidth | Equal to or wider than the resolution bandwidth | 30 kHz |
| Sweep time | Equal to or narrower than the resolution bandwidth | 50 msec |

Table continued

| Item | Setting value | Optimum value |
|---|---|---|
| Number of averages | 128 times or more | 128 times |

Generally, NBSNR (or CNR) representing the quality of a wobble signal is evaluated by inputting the wobble signal directly to the frequency characteristic analyzer and measuring the frequency characteristic. As disclosed in Jpn. Pat. Appln. KOKAI Publication No. 2004-280878, when a wobble signal is subjected to binary phase modulation with a phase difference of 180 degrees, it is necessary to evaluate the frequency characteristic after the squaring of the wobble signal to remove the modulated components.

In an optical disk of the present invention, however, since the wobble phases of the adjacent tracks differ from that of the reproduced track and a crosstalk between the wobble signals from the adjacent tracks occurs, the modulated components remain near the center frequency after the squaring of the wobble signal.

FIG. 18A shows a frequency characteristic of a squared wobble signal without a crosstalk. FIG. 18B shows a frequency characteristic of a squared wobble signal with a crosstalk. Generally, when NBSNR is measured for a frequency characteristic curve as shown in FIG. 18A, the frequency components near the center frequency are measured as noise levels. In an optical disk of the present invention, since the modulated components remain as shown in FIG. 18B, such a method cannot be used.

An evaluating method according to the present invention is characterized in that noise levels are evaluated in a frequency band away from the center frequency where the residue of the modulated components has decreased sufficiently. As seen in FIGS. 18B and 20, the result of measuring a plurality of disks has shown that, in a frequency band about 150 kHz away from the center frequency, the residue of the modulated components reaches an almost negligible level. From this, evaluating the noise level in a band 150 kHz or more away from the center frequency enables the noise level of a disk to be evaluated accurately, regardless of the residue of the modulated components.

FIG. 19 is a flowchart for measuring NBSNR of a squared wobble signal according to an embodiment of the present invention.

In a first step, the wobble signal output from the optical disk apparatus is input to a BPF and a squaring circuit. The obtained squared wobble signal is input to the frequency characteristic analyzer. Since the squaring circuit is liable to get saturated, the output of the squaring circuit is checked and the gain of the input signal is adjusted so that the output may not get saturated (STEP 1).

In a second step, the parameters of the frequency characteristic analyzer are set to the values listed in Table 2 (STEP 2).

In a third step, test data is recorded onto the optical disk. At this time, the test data is recorded so as to be physically continuous and further recorded into 400 tracks or more. If a signal has been already recorded on the disk, when the wobble in the unrecorded section is evaluated, this step is skipped and control proceeds to a fourth step (STEP 3).

In a fourth step, tracks of the optical disk are reproduced consecutively and the frequency characteristic is measured (STEP 4). Tracks are supposed to be reproduced consecutively and such scanning as track jump is not supposed to be done in the middle, until the number of averages of the results of measuring the frequency characteristic are reached 128.

In a fifth step, the peak level near the center frequency of the frequency characteristic measured as the carrier level is measured (STEP 5).

In a sixth step, as the noise level, the average value of the results of measurements in area A -250 kHz to -200 kHz away from the center frequency and in area B +200 kHz to +250 kHz away from the center frequency is measured (STEP 6).

In this example, 1.14 MHz to 1.19 MHz are set as area A and 1.59 MHz to 1.64 MHz are set as area B. The average of the measured values in these areas is determined to be a noise level. FIG. 20 shows a noise level measuring range.

In a seventh step, the measured carrier level and noise level are substituted into equation (3), thereby determining NBSNR of the squared wobble signal (STEP 7).

Validity of the setting values for squared wobble signal NSBNR evaluating unit

Next, FIGS. 21A and 21B show the results of measurements when the carrier level was measured 10 times in each session, while changing the number of averages, 8, 16, 32, and 128. As shown in step (STEP 4) of FIG. 19, it is seen that averaging the measurements of the carrier level 128 times gives a stable measurement result. Therefore, it is desirable that the carrier level should be updated at intervals of the amplitude variation period or less to make the number of averages equal to or more than 128.

Specifically, FIGS. 21A and 21B show the result of the measurements when carrier level was measured ten times in each session, changing the number of averages. In the measurements, the same disk and the same evaluating unit were used. The results of the measurements have shown that, when the number of averages was small, the results of the individual measurements varied greatly. The maximum value and minimum value of the results of 10 measurements were 1.6 dB larger than 1 dB even if the number of averages was set to 32, which indicates the occurrence of a large variation in the measurement.

The variation results from a fluctuation in the wobble amplitude. Since the result of making measurements where the amplitude fluctuation is small differs from the result of making measurements where the amplitude fluctuation is large, it is necessary to average fluctuations in the amplitude to make accurate measurements. Since the fluctuation period of the wobble amplitude is about 4 rounds of track, if the radius is, for example, 58 mm, the fluctuation frequency is about 5 Hz and the fluctuation period is about 220 msec. Two methods of averaging the fluctuation components in measuring the frequency characteristic can be considered: one is to lower the frequency band of the video filter, that is, to do averaging by a low-pass filter and the other is to make measurements with a high-frequency-band video filter and then average the results of the measurements numerically. When the averaging by a low-pass filter is considered, the frequency band of the filter must be made equal to or lower than 5 Hz. In this case, it takes 220 msec or more to measure one point in the frequency components. For example, measuring 1000 points in a frequency range of 500 kHz requires 200 sec or more. Furthermore, 200 sec or more elapse from when the first point is measured until the last point is calculated, which causes a problem: the measuring points on the disk are rather far away from one another on a frequency component basis.

On the other hand, in the numerically averaging method, one point is measured in a shorter period than the fluctuation period and the results of measurements are averaged. In this case, the frequency band of the video filter has to be set sufficiently higher than 5 Hz. The sweep time, which is the time required to measure the frequency characteristic in a range of 500 kHz once, has to be made sufficiently shorter than the fluctuation period. For example, if the radius is 24.0 mm, the sweep time must be made shorter than $(24 \times 2 \times \pi)$/linear velocity $\times$ 4 [tracks] = 91 msec. Since high-speed measurements impose a heavy burden on the measuring unit, making the sweep time too short causes a problem. For instance, if the sweep time is set to 50 msec shorter than the fluctuation period, the frequency characteristic can be measured once or twice in one period of the fluctuation wave. In the measuring method of the present invention, the measurements are averaged a sufficient number of times, which makes it possible to obtain an average frequency characteristic unaffected by a fluctuation in the wobble amplitude. Moreover, the result of experiments has shown that 128 or more was sufficient for the number of averages. In this case, the time required for measurements is 50 msec $\times$ 128 times = 6.4 sec, which results in a remarkable reduction in the time for measurements as compared with the averaging by the video filter.

In addition, since 6.4 sec is the time required to reproduce about 300 tracks near a radius of 24 mm, test data has to be recorded in 300 tracks or more. Actually, it is desirable to record test data in 400 tracks or more, taking a measurement margin or the like into account.

As described above, in this invention, when SNR (Signal-to-Noise Ratio) of the wobble signal is measured, the sweep time is set shorter than the period of the amplitude fluctuation and the results of measurements are further averaged sufficiently, which enables the measuring accuracy to be increased and the measuring time to be made shorter.

Address Format

The address format of an optical disk according to an embodiment of the present invention will be explained in referring to FIG. 22. In an optical disk of the present invention, tracks are divided into physical segment blocks. Information, such as user data, is recorded and reproduced by accessing the information in physical segment blocks. A physical segment block is composed of seven physical segments (a and b in FIG. 22). A physical segment is composed of 17 wobble data units (WDU) (c in FIG. 22).

A WDU, which is composed of 84 wobbles, is capable of storing 3 bits of information in Data 1, Data 2, and Data 3 through phase modulation (d in FIG. 22). 3 bits of information included in each of the 17 WDUs in one physical segment are gathered, thereby forming information shown by e in FIG. 22.

This information, which is organized in physical segments, is composed of segment information, physical segment block address, physical segment order, and CRC (error correction code). Therefore, a physical segment block address corresponding to address information on a physical segment block is recorded seven times in one physical segment block.

Address Demodulation Circuit

FIG. 23 is a block diagram of an address modulation circuit. The address demodulation circuit is mainly composed of a band-pass filter 401, a phase-locked loop circuit (PLL) 402, a phase detector 102, a slice level controller 403, and an address decoder 404. The PLL circuit 402 generates a reference phase signal and a reference clock from the input wobble signal. The phase detector 102 multiplies the reference phase signal and the wobble signal together and integrates the result at intervals of the reference clock, thereby extracting the phase information in the form of voltage information. At this time, if the phase of the reference phase signal coincides with that of the wobble signal, the voltage information is on the positive side viewed from the reference phase signal. If the phase is reversed 180 degrees, the voltage information is on the negative side. If the phase of the reference phase signal coincides with that of NPW (see FIG. 7), a signal on the positive side is NPW and a signal on the negative side is IPW (see FIG. 7).

The slice level controller controls the slice level so that it may take the mid-point value between the positive voltage level and the negative voltage level and determines a signal on the positive side with respect to the slice level to be NPW and a signal on the negative side to be IPW. If the phase of the reference phase signal coincides with that of IPW, the determination is reversed. On the basis of the results of the determined NPW and IPW, the address decoder 404 reads address information, checks CRC, and others.

Address Error Rate and Evaluation Signal

FIG. 24 shows the result of measuring a fluctuation in the amplitude of the wobble signal and the value of NBSNR of the squared wobble signal (the abscissa axis) and the address information reading error rate (or address error rate) (the ordinate axis) when the optical disk was evaluated by the evaluating method of the present invention. The result of address measurements has shown the relationship between a fluctuation in the amplitude of the wobble signal (or wobble signal quality evaluation indicator), the value of NBSNR of the squared wobble signal, and the address error rate (or the value to be obtained in the end). If fluctuations in the amplitude are the same, that is, if the amount of wobble crosstalk in each of the adjacent tracks is the same, the address error rate increases as NBSNR becomes worse. On the other hand, even when NBSNR is the same, if a fluctuation in the amplitude increases, the address error rate increases.

In an optical disk according to the present invention, since a plurality of pieces of address information are included in one recording unit and CRC-added address information enables error determinations, the address error rate acceptable to the system, that is, the address error rate at which the signal can be recorded and reproduced at the desired address with almost no error by majority decision, continuous complementation, or the like, can be considered to be about $1.0 \times 10^{-3}$.

FIG. 25 is a diagram obtained by extracting the values of Wppmax/Wppmin and NBSNR at the time of an address error rate of $1.0 \times 10^{-3}$ from the result of FIG. 24 and plotting the values.

The result of the measurement in FIG. 24 has shown that the values of Wppmax/Wppmin (Yw) and NBSNR (Xn) at the time of an address error rate of $1.0 \times 10^{-3}$ maintains the relationship approximated by $Yw = 0.07 \times Xn + 0.5$. Since in the range meeting the expression $Yw > 0.07 \times Xn + 0.5$, the address error rate drops below $1.0 \times 10^{-3}$, it is difficult to record and reproduce information onto and from such a disk. On the other hand, if the threshold value is set in the range meeting the expression $Yw << 0.07 \times Xn + 0.5$ in determining whether a produced disk is good or bad, the yield of disks decreases, causing a problem: the manufacturing cost of disks rises. Therefore, it is best to set the threshold value for determining whether the produced disk is good or bad in the range enclosed by the straight lines $Yw = 0.07 \times Xn + (0.5 + 0.1)$ and $Yw = 0.07 \times Xn + (0.5 - 0.15)$. If the threshold is in this range, a disk which enables addresses to be read stably can be manufactured with the maximum yield. FIG. 25 shows a straight line corresponding to a threshold value in the best yield range.

Manufacture of Disks

FIG. 26 shows the configuration of a mastering apparatus for manufacturing disks. FIG. 27 is a flowchart for manufacturing disks. An optical disk medium of the present invention is manufactured in the steps of producing a master (ST1), producing a stamper (ST2), forming (ST3), forming a medium film (ST4), and laminating (ST5). The laminating step is followed by the step of testing a product (ST6).

In the step of producing a mastering, resist is applied to a flat master, the resist on the master is exposed at a mastering apparatus of FIG. 26, and the exposed resist is removed in development, thereby producing a master which has the same concavities and convexities as those in the information recording layer of the final optical disk medium. In the process of producing a stamper, the master is plated with Ni or the like to form a sufficiently thick metal plate and the master is separated from the plate, thereby producing a stamper. At this time, the concavities and convexities formed in the master are formed in the stamper in such a manner that they are reversed. Next, in the forming step, the stamper is used as a model and such resin polycarbonate is poured into the stamper, thereby forming a substrate. At this time, the concavities and convexities in the surface of the formed substrate are what have been transcribed from the concavities and convexities in the stamper, that is, are almost the same as those in the master. Next, on the concavo-convex part, a reflecting film, a recording material film, and others are formed by spattering, spin coating, and the like. To protect the film-formed part, another substrate is laminated, which completes the optical disk medium. Specifically, guide grooves, wobble tracks, and others are recorded at the mastering apparatus shown in FIG. 26.

The mastering apparatus of FIG. 26, which has a controller 601, controls the sequence of each functional block. On the basis of the signal output from a formatter 602 to a laser driver (LDD) 603, the amount of laser beam from an optical system 604 is controlled. The laser beam passes through an AO modulator, an objective, and others included in the optical system 604 and is projected onto the master 605. The focus and others of the irradiated light are controlled by a servo circuit 606. The servo circuit 606 takes in the sense signal from a photodetector (PD) for sensing the reflected light from the master 605 via the optical system. Then, the servo circuit 606 controls the number of revolutions of the master 605 and others via a control section 608, such as a spindle motor. Similarly, the rotation of the disk and the position of the disk in the radial direction are controlled.

Since the part of the master which is struck by light is exposed, the part becomes guide grooves or the like. On the basis of physical address information or the like to be recorded onto the optical disk, the formatter 602 outputs a signal to a wobble control circuit 611. The wobble control circuit 611 is capable of moving the beam spot irradiated on the master 605 minutely in the radial direction by controlling the AO modulator and the like in the optical system.

The amount of laser beam and the number of revolutions of the spindle motor are controlled, thereby controlling the width and shape of the groove, which enables the amount of wobble crosstalk to be adjusted. Here, the individual controlled amounts of the mastering apparatus are adjusted so that the amount of fluctuation in the amplitude of the wobble signal, Yw, and NBSNR after the squaring, Xn, may satisfy the expression $Yw > 0.07 \times Xn + (0.5 + 0.1)$, which makes it possible to manufacture an optical disk medium which has a high yield and an excellent reproduction stability.

The above-described embodiments include the evaluating method, means, and apparatus, and the manufacturing method, means, and apparatus, and further include information recording mediums manufactured by the methods, means, and apparatuses.

In a method of and apparatus for evaluating an information recording medium in which the address of a guide groove wobbling at a specific frequency is recorded by modulating the wobble in the guide groove and an apparatus of manufacturing the information recording medium, a method, means, or apparatus is used which estimates the address reproduction error rate from both of the amount of fluctuation in the amplitude in the wobble signal and the signal-to-noise ratio (SNR) and sets a range with a lower error rate to make a decision.

Moreover, the threshold value for evaluating the information recording medium is determined so that the amount of fluctuation in the amplitude of the wobble signal, Y, and the signal-to-noise ratio (SNR), X, may satisfy the following equation (A):

$$Y = A \times X + B \text{ (A and B are constants)} \qquad \text{(A)}$$

where if A is 0.07 and B is 0.35, the error rate falls in the range of 0.6.

In addition, the following method, means, and apparatus are used: when the amount of fluctuation in the amplitude of the wobble signal is obtained, the peak value and bottom value of a fluctuation in the amplitude of a wobble signal are measured in the period of the fluctuation in the amplitude of the wobble signal. The average value of the peak values and that of the bottom values are determined to be the maximum value and minimum value of the fluctuation in the amplitude of the wobble, respectively. From the maximum and minimum values, the amount of fluctuation in the amplitude of the wobble is determined.

Furthermore, a method of, means for, and apparatus for setting the gate interval for measuring the peak value and the bottom value to [wobble period/($2 \times \pi \times$ track pitch)] tracks or more are used. Moreover, a method of, means for, and apparatus for synchronizing the gate interval for measuring the peak value and the bottom value with one round of a track may be used. In addition, when the noise level is measured to obtain the signal-to-noise ratio, a method of, means for, and apparatus for measuring the noise level at a frequency 150 kHz or more away from the center frequency of the signal are used. The result of measuring the frequency characteristic of the wobble signal is updated at intervals of the amplitude fluctuation period or less and the number of averages is set to 128 or more.

As described above, the present invention provides the following advantages. Since an address reading circuit is very complex, this causes a cost problem in evaluating the recording quality of address information from the address reading rate. In contrast, use of two types of evaluation indicators, amplitude fluctuations and NBSNR of a squared wobble signal, enables the recording quality of address information to be evaluated accurately, using a relatively simple evaluation system and evaluation circuit.

When amplitude fluctuations and NBSNR are evaluated separately, the recording quality of address information cannot be evaluated accurately. In this specification, such a relationship between amplitude fluctuations and NBSNR as makes the address reading rate constant has been clarified. This makes it possible to make adjustments in manufacturing disks in such a manner that, when NBSNR cannot be improved, amplitude fluctuations are improved. These adjustments enable the disk production yield to be improved. Accurate evaluation of the recording quality of address information produces the effect of improving the interchangeability between disks.

When a fluctuation in the amplitude is measured, averaging the maximal value and minimal value of the period of the fluctuation makes it possible to remove large local fluctuations. In the method of determining the peak, when there is a local change in a part of the amplitude even if there is no problem with the entire amplitude, it is determined that reproduction is impossible. Therefore, actually, a local error can be corrected using the continuity of addresses. Since reproducible disks determined to be unreproducible in the prior art can be determined accurately to be reproducible disks, which increases the disk production yield.

Since a fluctuation in the amplitude occurs mostly in the beat period of wobble crosstalk, the minimal and maximal values are measured at gate intervals of a period longer than the beat period (= wobble period/(2 × π × track pitch) tracks), which enables the maximal and minimal values to be determined accurately.

The frequency characteristic of the squared wobble signal fluctuates greatly according to a change in the wobble crosstalk in the period of (wobble period/(2 × π × track pitch)) tracks. Therefore, averaging local values enables the average quality of disks to be evaluated.

This invention is not limited to the above embodiments and may be embodied by modifying the component elements without departing from the spirit or essential character thereof. In addition, various inventions may be formed by combining suitably a plurality of component elements disclosed in the embodiments. For example, some components may be removed from all of the component elements constituting the embodiments. Furthermore, component elements used in two or more embodiments may be combined suitably.

Use of two types of evaluation indicators, amplitude fluctuations and NBSNR of a squared wobble signal, enables the recording quality of address information to be evaluated accurately, using a relatively simple evaluation system and evaluation circuit.

In this specification, such a relationship between amplitude fluctuations and NBSNR as makes the address reading rate constant has been clarified. This makes it possible to make adjustments in manufacturing disks in such a manner that, when NBSNR cannot be improved, amplitude fluctuations are improved. These adjustments enable the disk production yield to be improved. Accurate evaluation of the recording quality of address information causes the interchangeability between disks to be improved.

Since reproducible disks determined to be unreproducible in the prior art can be determined accurately to be reproducible disks, which increases the disk production yield.

Since a fluctuation in the amplitude occurs mostly in the beat period of wobble crosstalk, the minimal and maximal values are measured at gate intervals of a period longer than the beat period (= wobble period/(2 × π × track pitch) tracks), which enables the maximal and minimal values to be determined accurately.

The frequency characteristic of the squared wobble signal fluctuates greatly according to a change in the wobble crosstalk in the period of (wobble period/(2 × π × track pitch)) tracks. Therefore, averaging local values enables the average quality of disks to be evaluated.

## Claims

1. An information recording medium evaluating method of evaluating an information recording medium in which the address of a guide groove wobbling at a specific frequency is recorded by modulating the wobble of the guide groove, the information recording medium evaluating method **characterized by** comprising:

   estimating an address reproduction error rate from both of the amount of fluctuation in the amplitude of a wobble signal and the signal-to-noise ratio (SNR);
   setting a specific range with a low error rate; and
   determining whether the error rate is within the specific range.

2. The information recording medium evaluating method according to claim 1, **characterized in that** a threshold value in the specific range is determined to evaluate the information recording medium so that the amount of fluctuation in the amplitude of the wobble signal, Y, and the signal-to-noise ratio (SNR) [dB], X, may satisfy the following equation (A):

$$Y = A \times X + B \text{ (A and B are constants)} \qquad (A)$$

   where A is 0.07 and B is within 0.35 to 0.6.

3. The information recording medium evaluating method according to claim 2, **characterized in that**

when the amount of fluctuation in the amplitude of the wobble signal is obtained,
measuring the peak value or bottom value of a fluctuation in the amplitude of the wobble in the period of a fluctuation in the amplitude of the wobble, setting the average value of the peak values or that of the bottom values as the maximum value or minimum value of the fluctuation in the amplitude of the wobble, respectively, and from the maximum and minimum values, determining the amount of fluctuation in the amplitude of the wobble.

**4.** The information recording medium evaluating method according to claim 3, **characterized in that** the gate interval for measuring the peak value or bottom value is set to (wobble period/(2 $\times$ $\pi$ $\times$ track pitch)) tracks or more.

**5.** The information recording medium evaluating method according to claim 4, **characterized in that** the gate interval for measuring the peak value or bottom value is synchronized with one round of a track.

**6.** The information recording medium evaluating method according to claim 1, **characterized in that** a noise level is measured at a frequency of 150 kHz or more away from the center frequency of the signal, when the noise level is measured to obtain the signal-to-noise ratio (SNR) [dB].

**7.** The information recording medium evaluating method according to claim 6, **characterized in that** the result of measuring the frequency characteristic of the wobble signal is updated at intervals of a period equal to or less than the period of a fluctuation in the amplitude and the number of averages is set to 128.

**8.** An information recording medium evaluating apparatus for an information recording medium in which the address of a guide groove wobbling at a specific frequency is recorded by modulating the wobble of the guide groove, the information recording medium evaluating apparatus **characterized by** comprising:

means (150) for obtaining the amount of fluctuation in the amplitude of a wobble signal;
means (160) for obtaining the signal-to-noise ratio (SNR) from the wobble signal; and
means (170) for estimating an address reproduction error rate from both of the amount of fluctuation in the amplitude and the signal-to-noise ratio (SNR), setting a specific range with a low error rate, and determining whether the error rate is within the specific range.

**9.** An information recording medium manufacturing method for an information recording medium in which the address of a guide groove wobbling at a specific frequency is recorded by modulating the wobble of the guide groove, the information recording medium manufacturing method **characterized by** comprising:

estimating an address reproduction error rate from both of the amount of fluctuation in the amplitude of a wobble signal and the signal-to-noise ratio (SNR) and setting a specific range with a low error rate;
determining the threshold value for setting the specific range with a low error rate in such a manner that the threshold value for evaluating the information recording medium is determined so that the amount of fluctuation in the amplitude of the wobble signal, Y, and the signal-to-noise ratio (SNR) [dB], X, may satisfy the following equation (1):

$$Y = A \times X + B \text{ (A and B are constants)} \qquad (1)$$

where A is 0.07 and B is within 0.35 to 0.6.; and
determining whether the address reproduction error rate is within the specific range.

**10.** An information recording medium **characterized in that** the address of a guide groove wobbling at a specific frequency is recorded by modulating the wobble of the guide groove, the information recording medium being prepared by:

estimating an address reproduction error rate from both of the amount of fluctuation in the amplitude of a wobble signal and the signal-to-noise ratio (SNR) [dB] and setting a specific range with a low error rate;
determining the threshold value for setting the specific range with a low error rate in such a manner that the threshold value for evaluating the information recording medium is determined so that the amount of fluctuation in the amplitude of the wobble signal, Y, and the signal-to-noise ratio (SNR) [dB], X, may satisfy the following equation (1):

$$Y = A \times X + B \text{ (A and B are constants)} \qquad (1)$$

where A is 0.07 and B is within 0.35 to 0.6.; and
determining whether the address reproduction error rate is within the specific range.

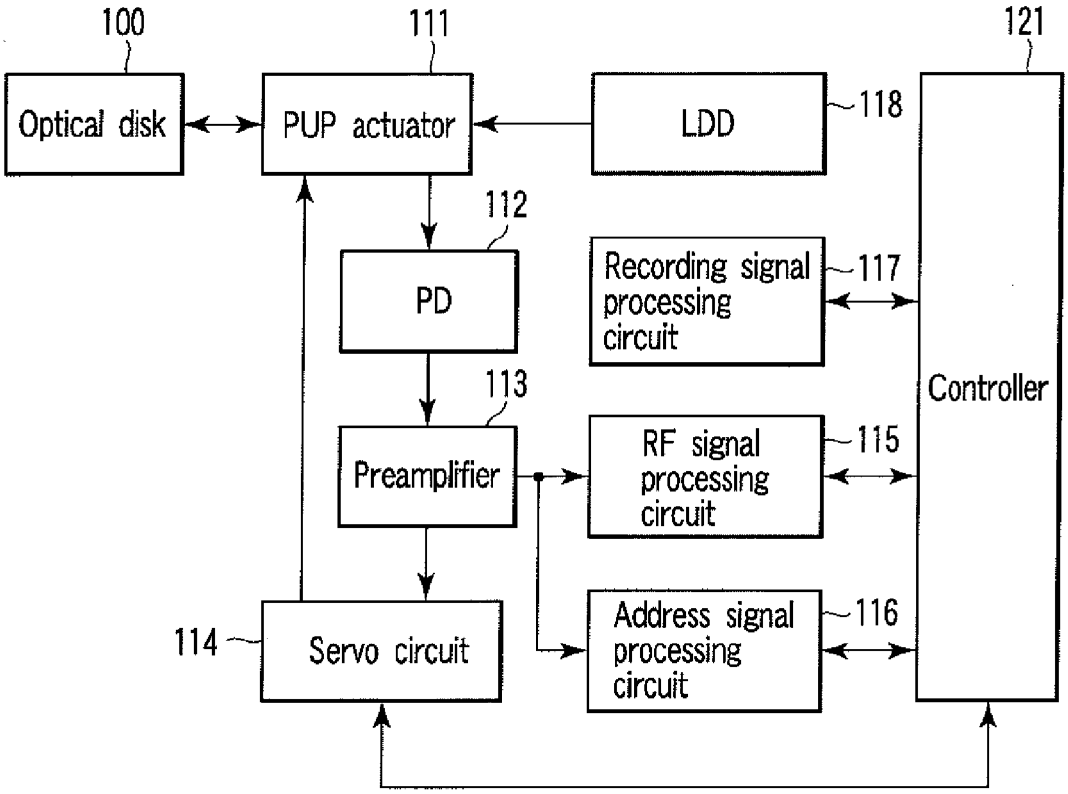
100
111
121
Optical disk
PUP actuator
LDD
118
112
PD
Recording signal processing circuit
117
113
Controller
Preamplifier
RF signal processing circuit
115
Address signal processing circuit
116
114
Servo circuit

FIG.1A

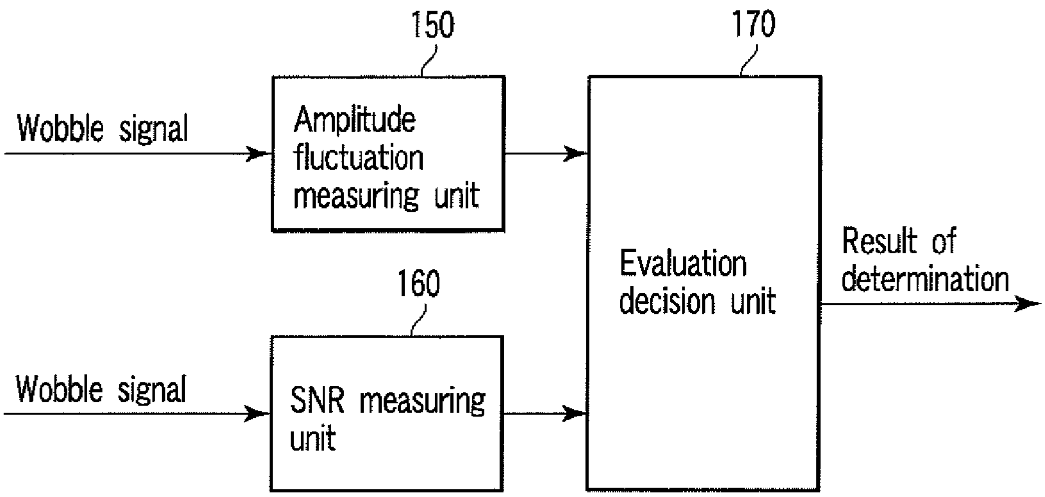
150
170
Wobble signal
Amplitude fluctuation measuring unit
Evaluation decision unit
Result of determination
160
Wobble signal
SNR measuring unit

FIG.1B

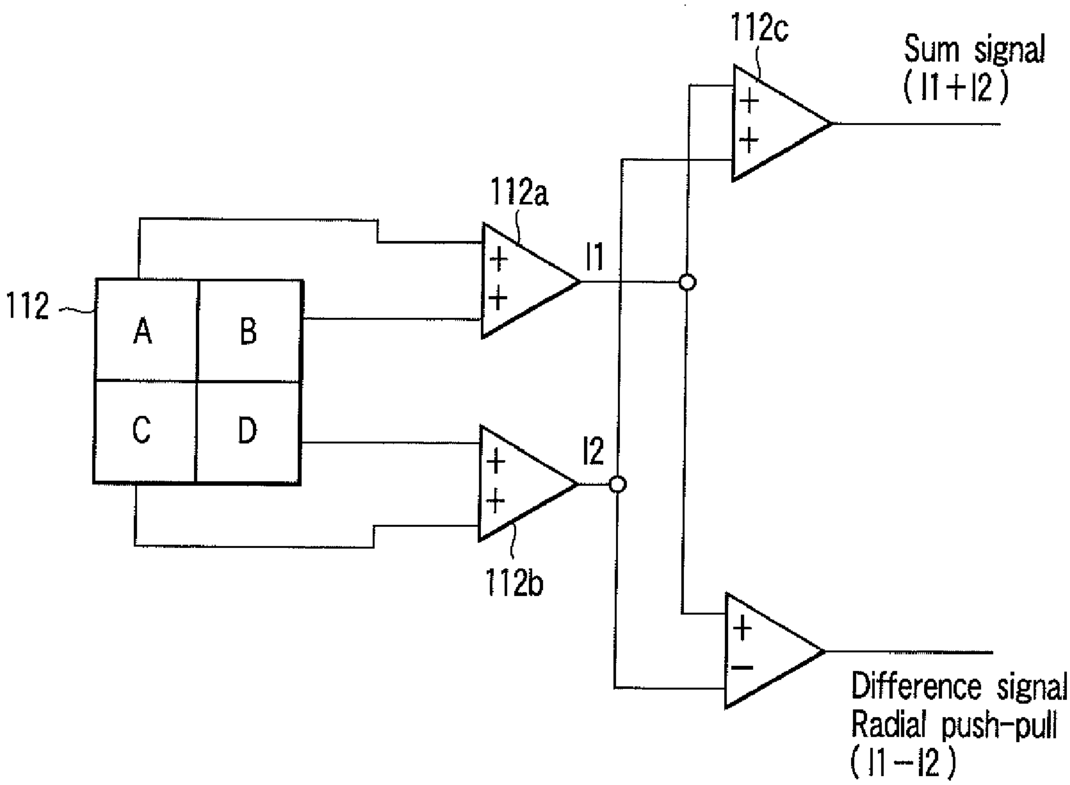
112c
Sum signal
( I1+I2 )
112a
I1
112
A
B
C
D
I2
112b
Difference signal
Radial push-pull
( I1−I2 )

FIG. 2

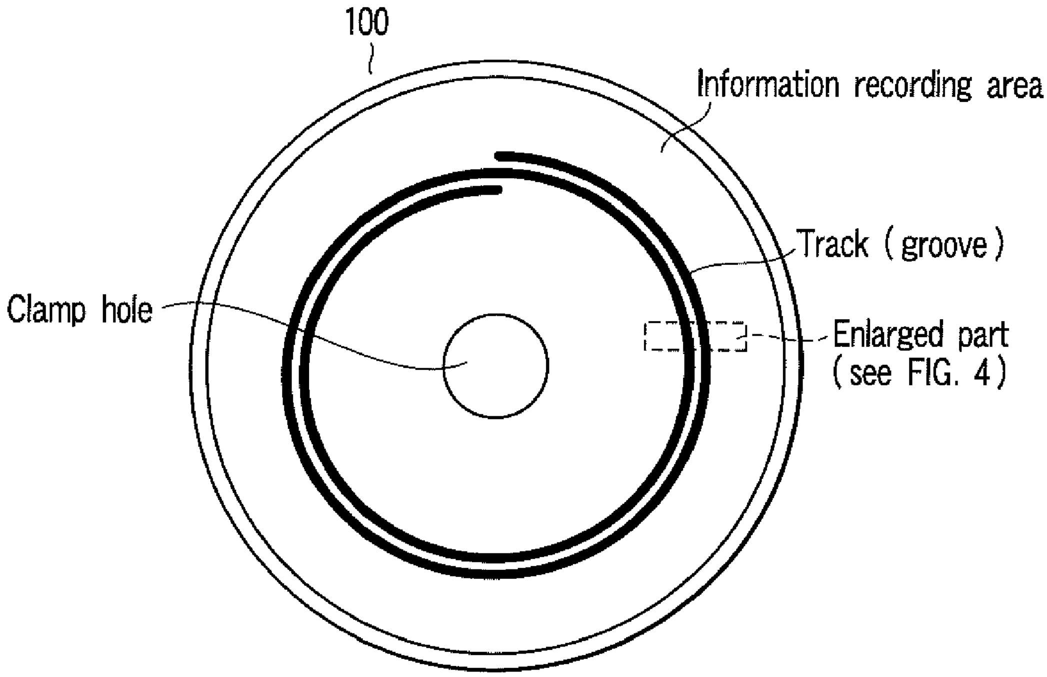
100
Information recording area
Track ( groove )
Clamp hole
Enlarged part
( see FIG. 4 )

FIG. 3

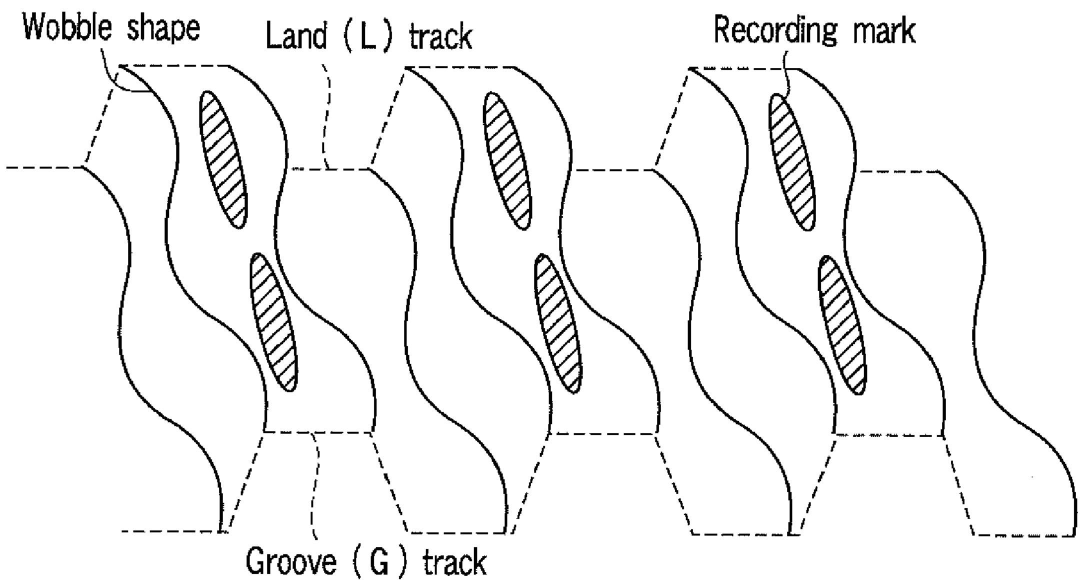
Wobble shape
Land ( L ) track
Recording mark
Groove ( G ) track

FIG. 4

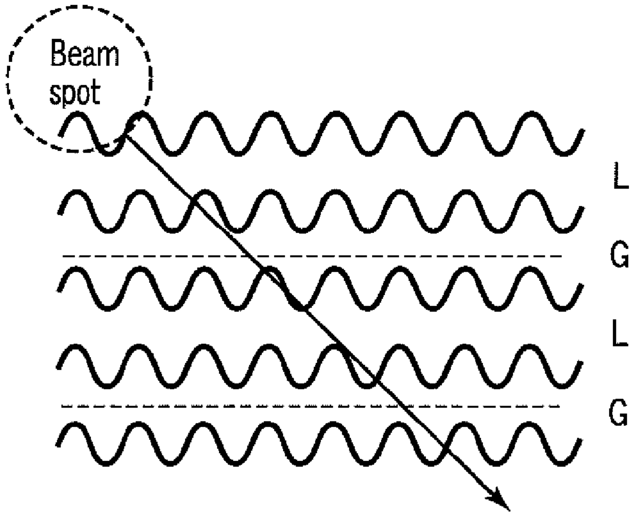


FIG.5A

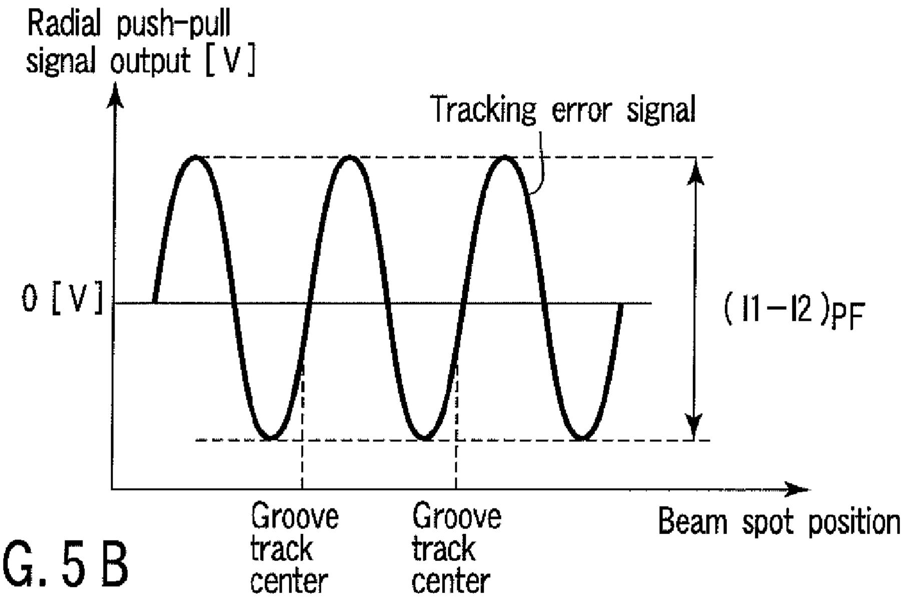


FIG.5B

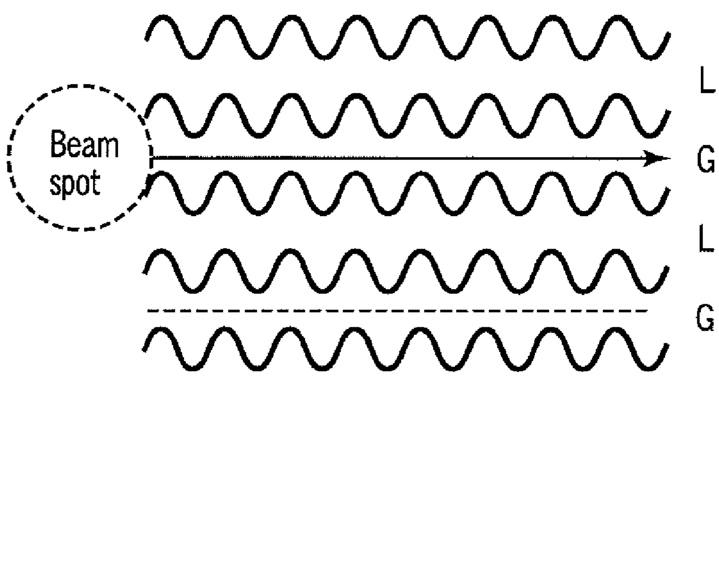


FIG.5C

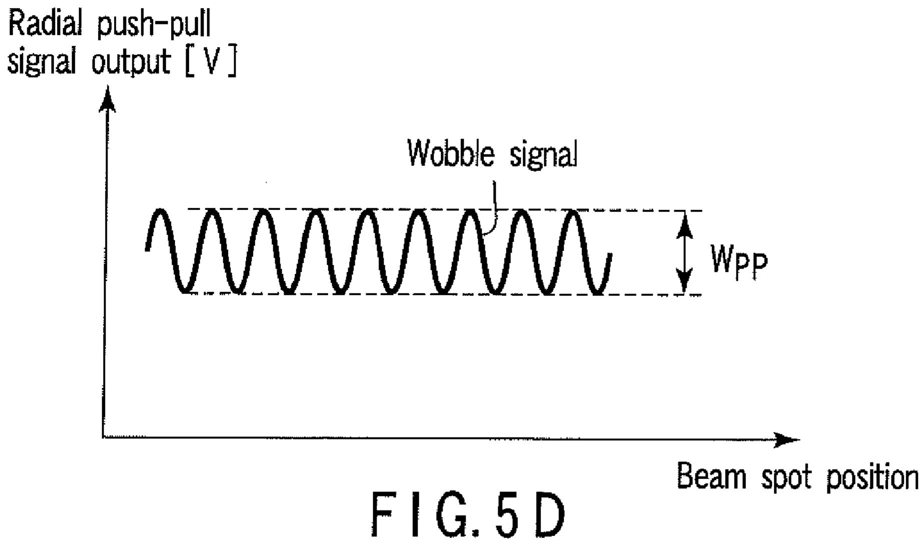


FIG. 5D

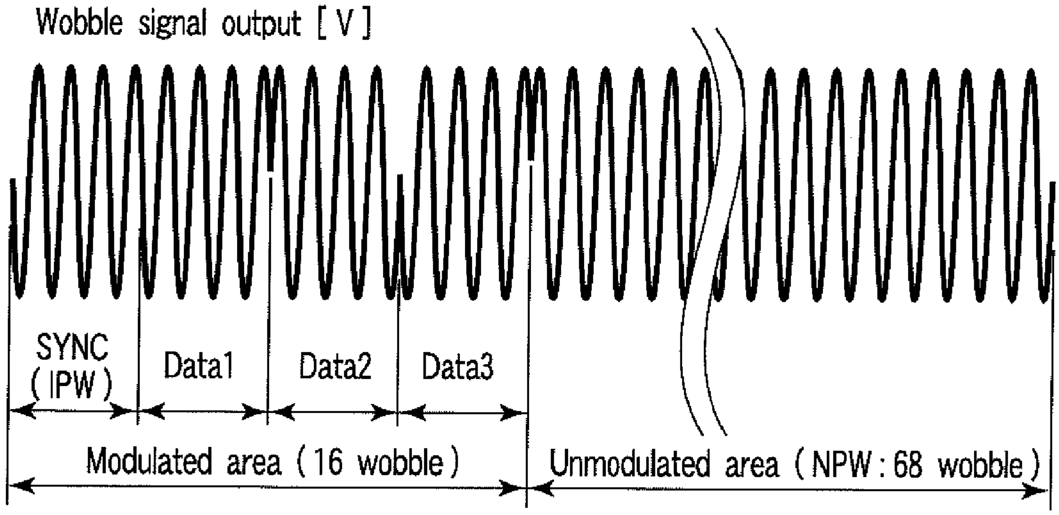


FIG. 6

FIG. 7

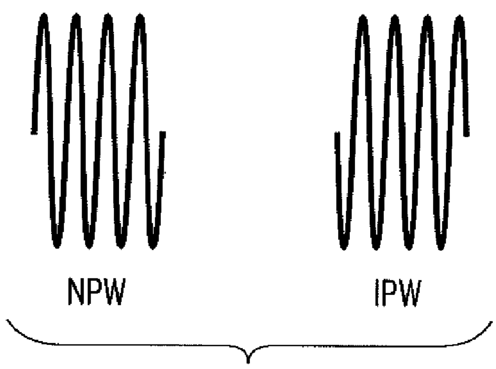

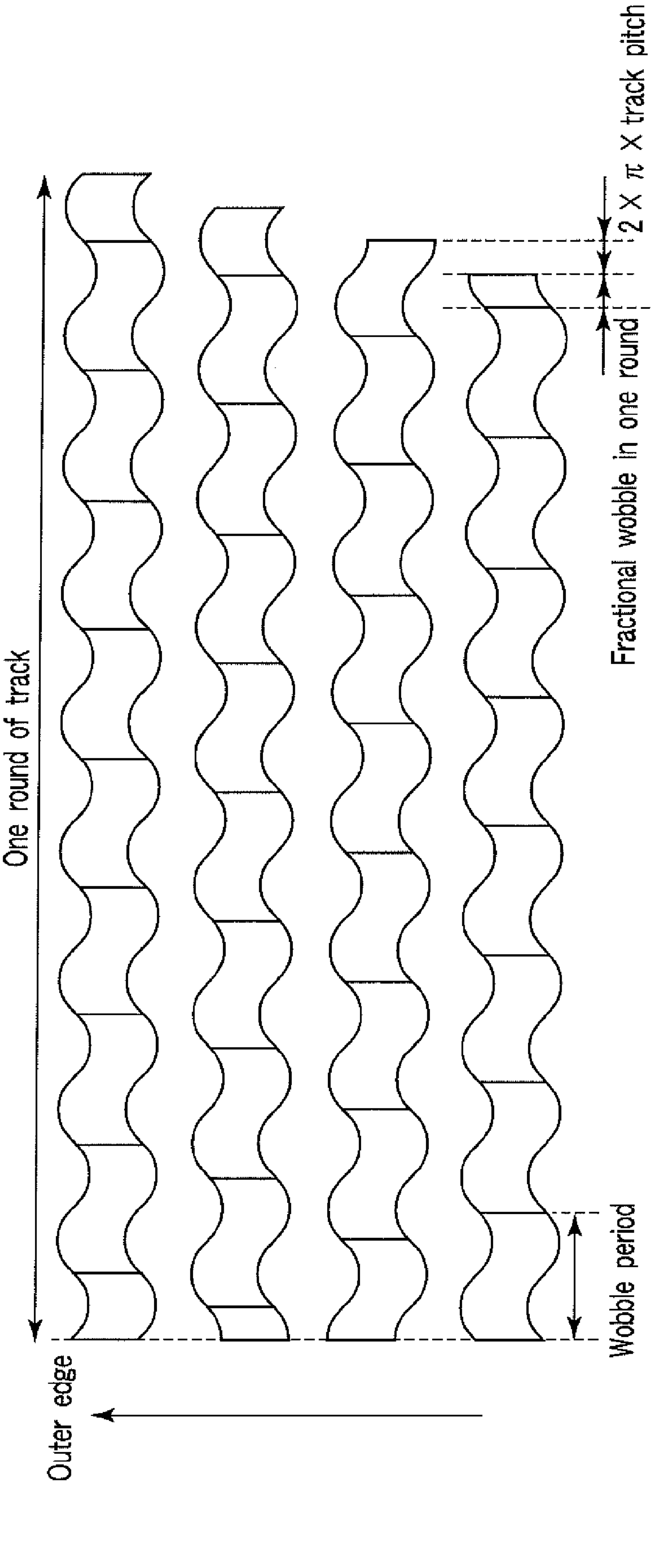
One round of track
Outer edge
Wobble period
Fractional wobble in one round
2 X π X track pitch

FIG. 8

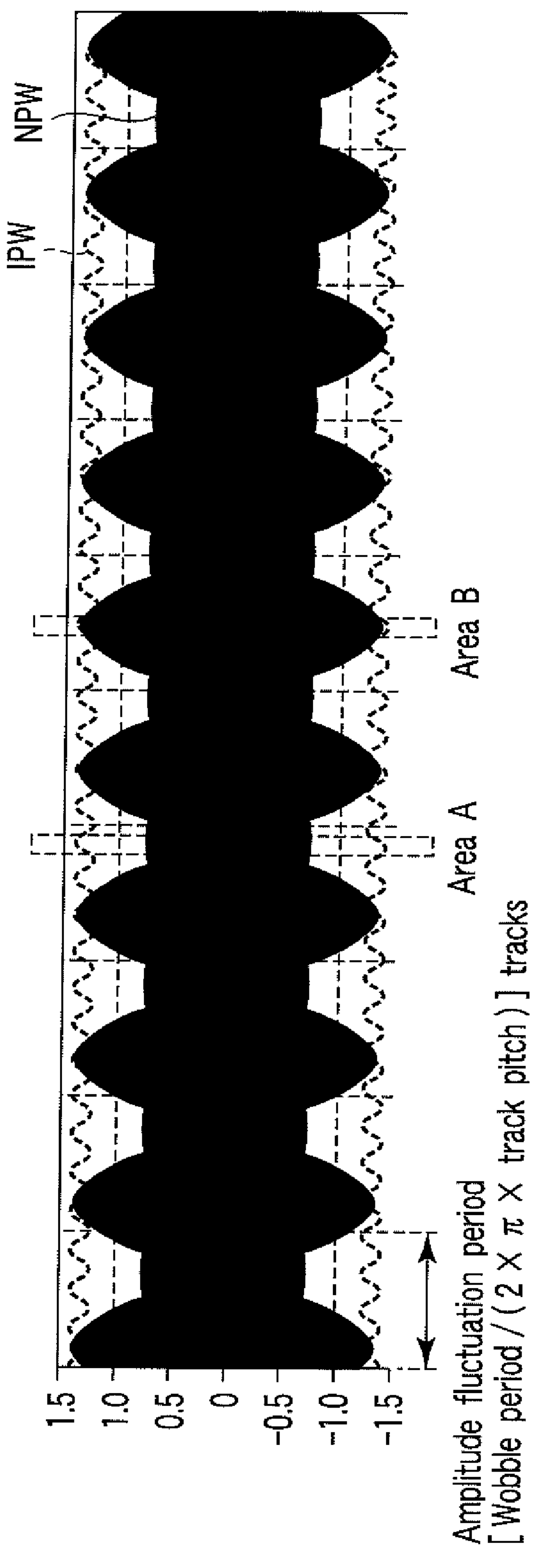
IPW
NPW
Area A
Area B
1.5
1.0
0.5
0
-0.5
-1.0
-1.5
Amplitude fluctuation period
[ Wobble period / ( 2 × π × track pitch ) ] tracks

FIG. 9A

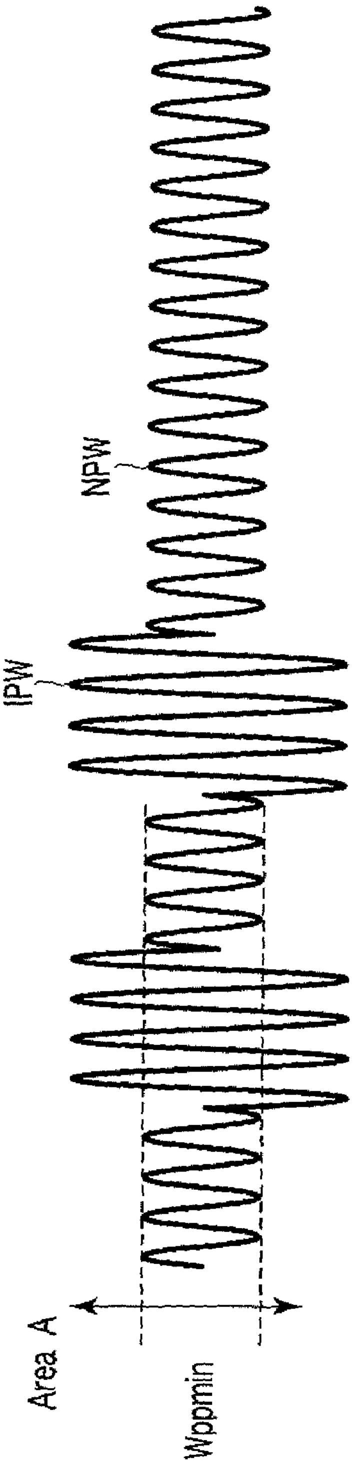


F I G. 9 B

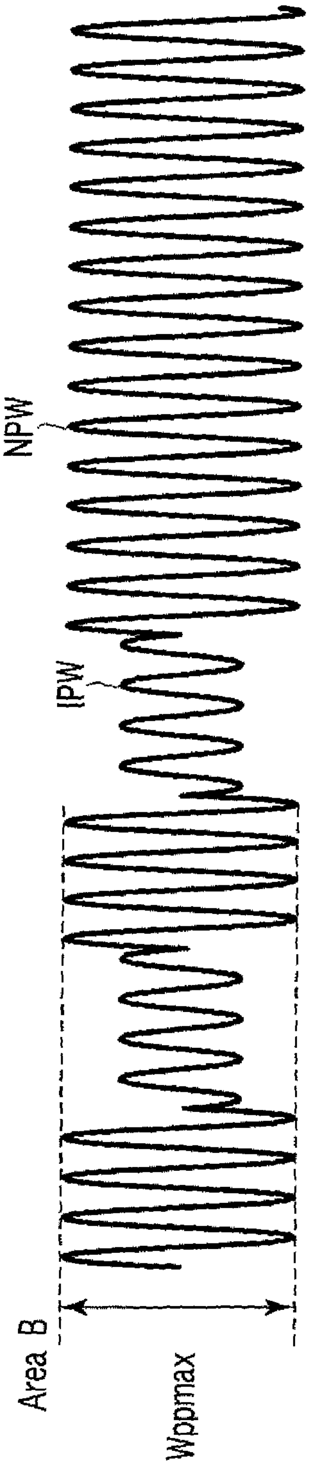


F I G. 9 C

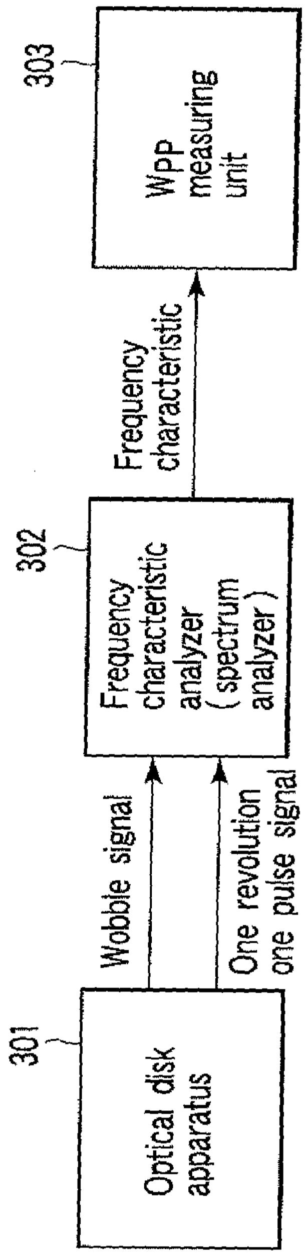
301
Optical disk apparatus
Wobble signal
One revolution one pulse signal
302
Frequency characteristic analyzer (spectrum analyzer)
Frequency characteristic
303
Wpp measuring unit

F I G. 10

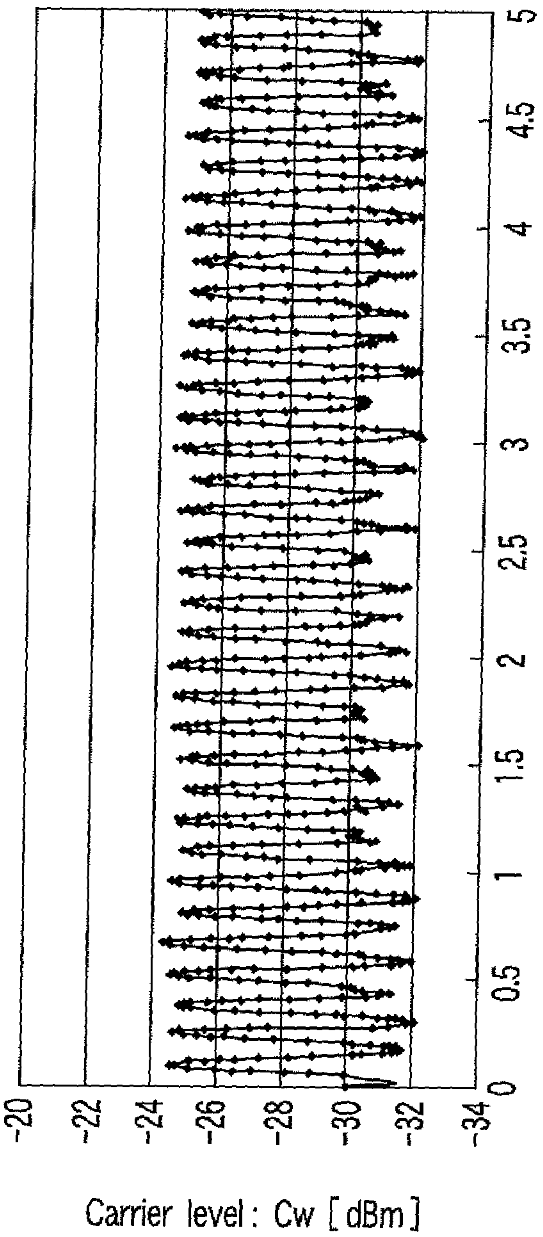
Carrier level: Cw [dBm]
-20
-22
-24
-26
-28
-30
-32
-34
0
0.5
1
1.5
2
2.5
3
3.5
4
4.5
5

F I G. 11

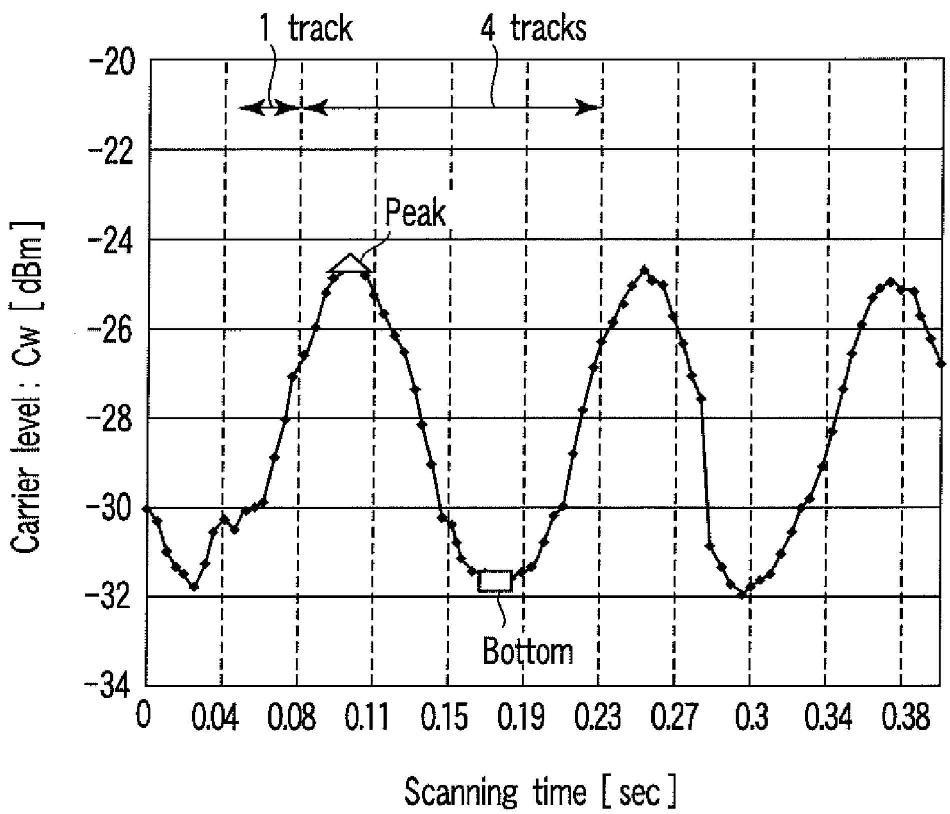
1 track
4 tracks
-20
-22
-24
-26
-28
-30
-32
-34
Peak
Bottom
Carrier level : Cw [ dBm ]
0
0.04
0.08
0.11
0.15
0.19
0.23
0.27
0.3
0.34
0.38
Scanning time [ sec ]

F I G. 1 2

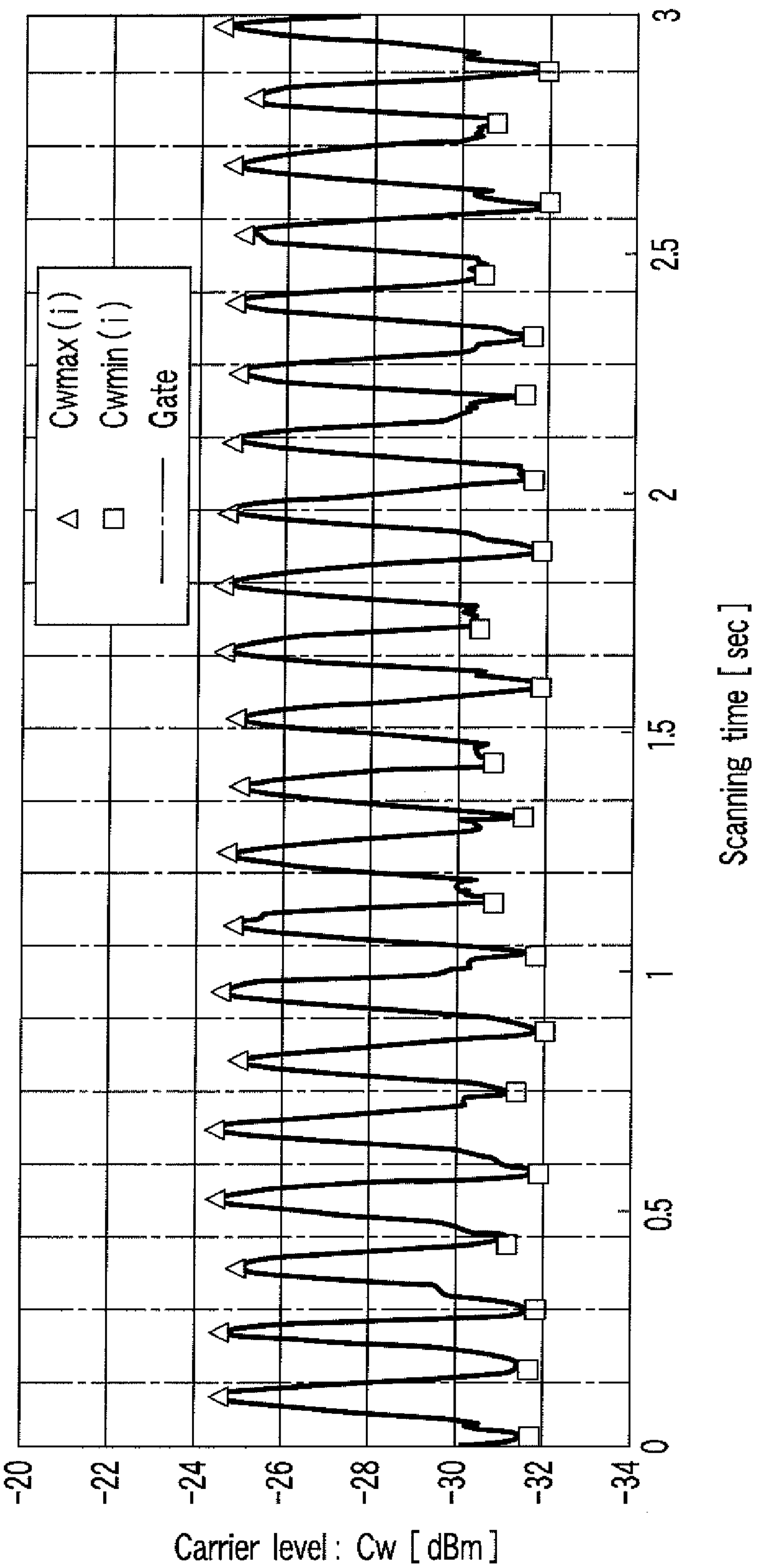
Cwmax ( i )
Cwmin ( i )
Gate
-20
-22
-24
-26
-28
-30
-32
-34
0
0.5
1
1.5
2
2.5
3
Scanning time [ sec ]
Carrier level : Cw [ dBm ]

F I G. 1 3

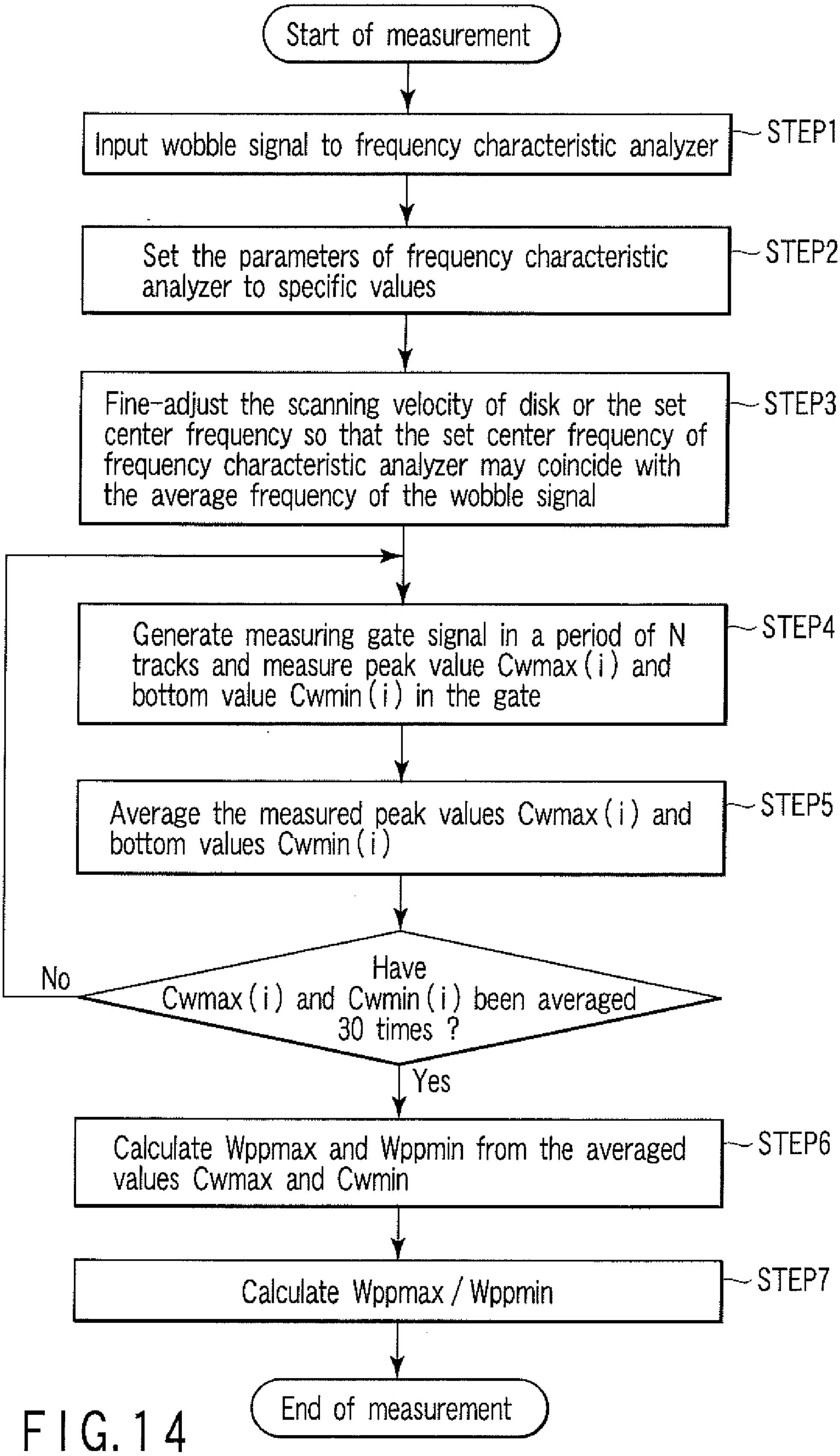
Start of measurement
Input wobble signal to frequency characteristic analyzer
STEP1
Set the parameters of frequency characteristic analyzer to specific values
STEP2
Fine-adjust the scanning velocity of disk or the set center frequency so that the set center frequency of frequency characteristic analyzer may coincide with the average frequency of the wobble signal
STEP3
Generate measuring gate signal in a period of N tracks and measure peak value Cwmax(i) and bottom value Cwmin(i) in the gate
STEP4
Average the measured peak values Cwmax(i) and bottom values Cwmin(i)
STEP5
Have Cwmax(i) and Cwmin(i) been averaged 30 times ?
No
Yes
Calculate Wppmax and Wppmin from the averaged values Cwmax and Cwmin
STEP6
Calculate Wppmax / Wppmin
STEP7
End of measurement

FIG.14

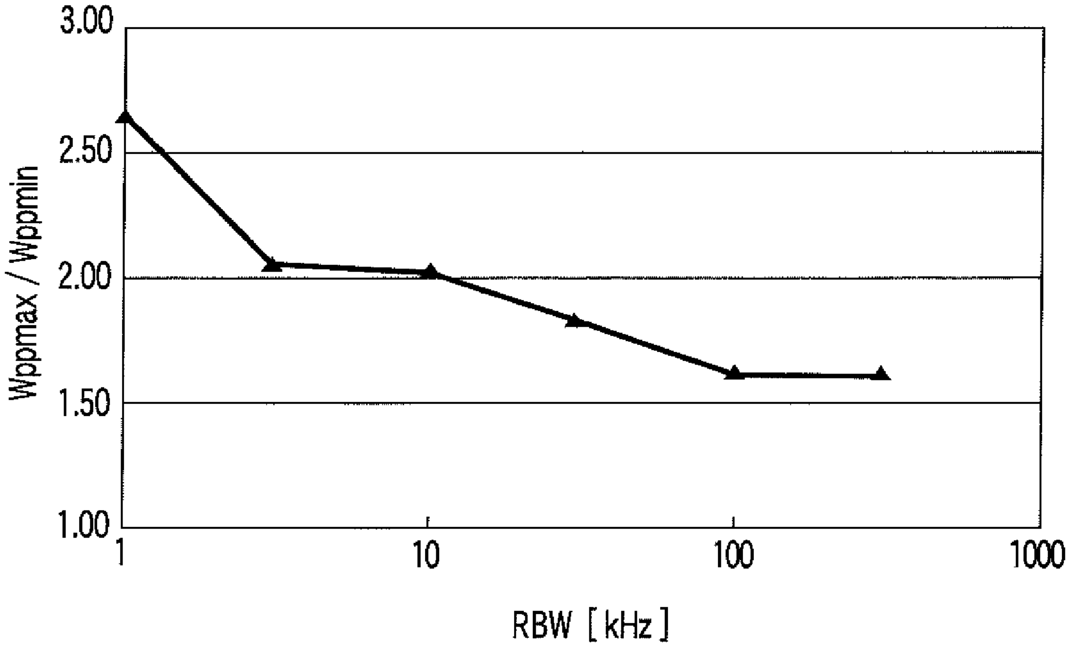


FIG.15

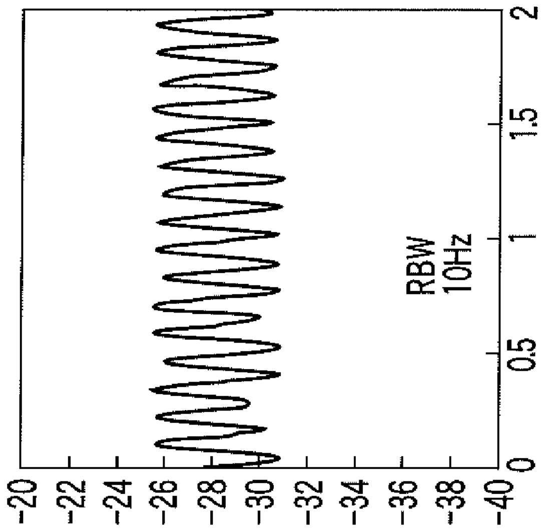


FIG.16A

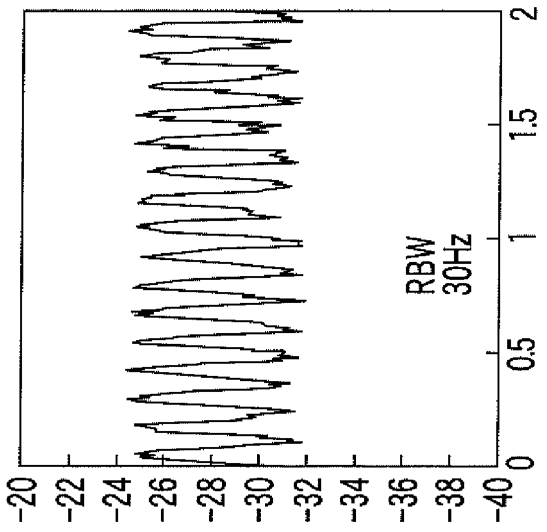


FIG.16B

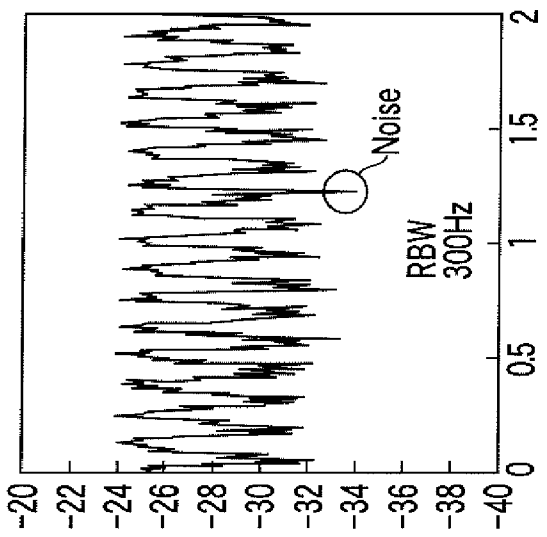


FIG.16C

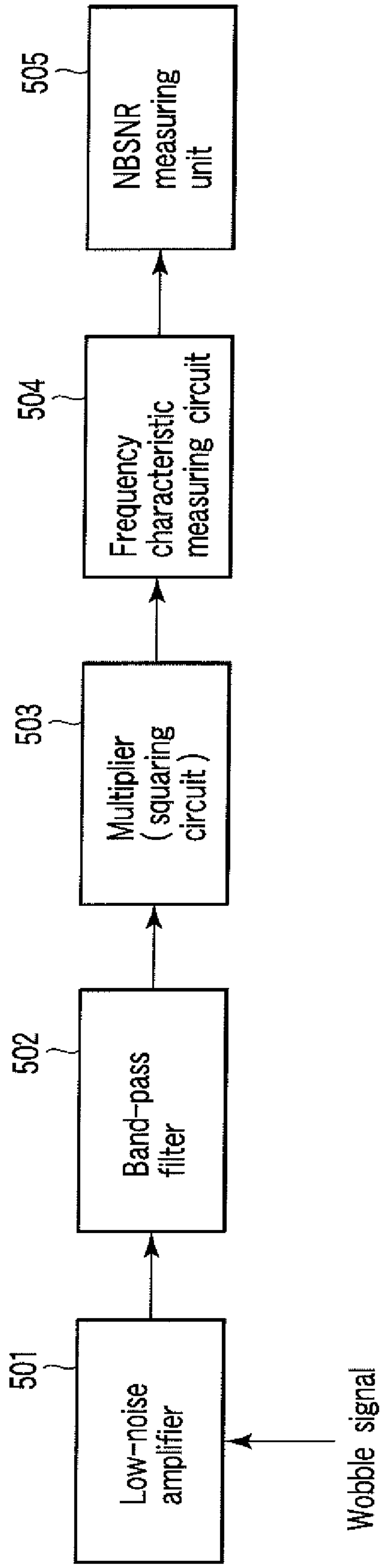
Wobble signal
501
Low-noise amplifier
502
Band-pass filter
503
Multiplier (squaring circuit)
504
Frequency characteristic measuring circuit
505
NBSNR measuring unit

F I G. 1 7

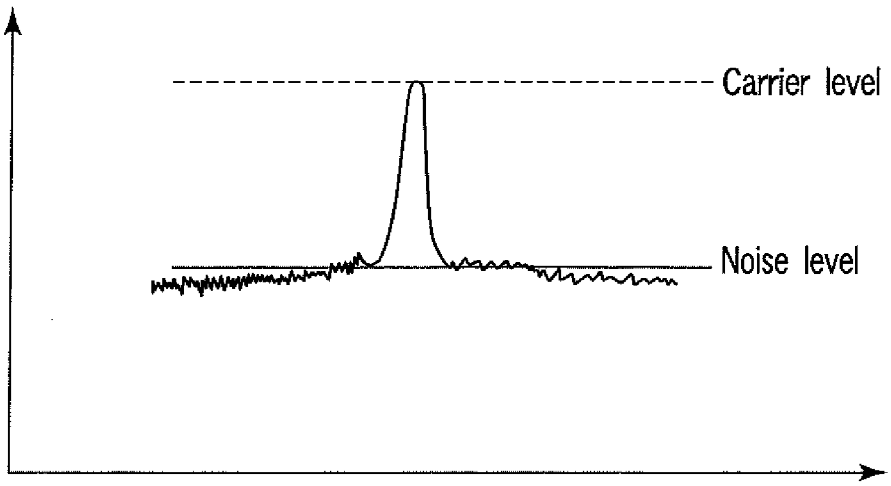


FIG.18A

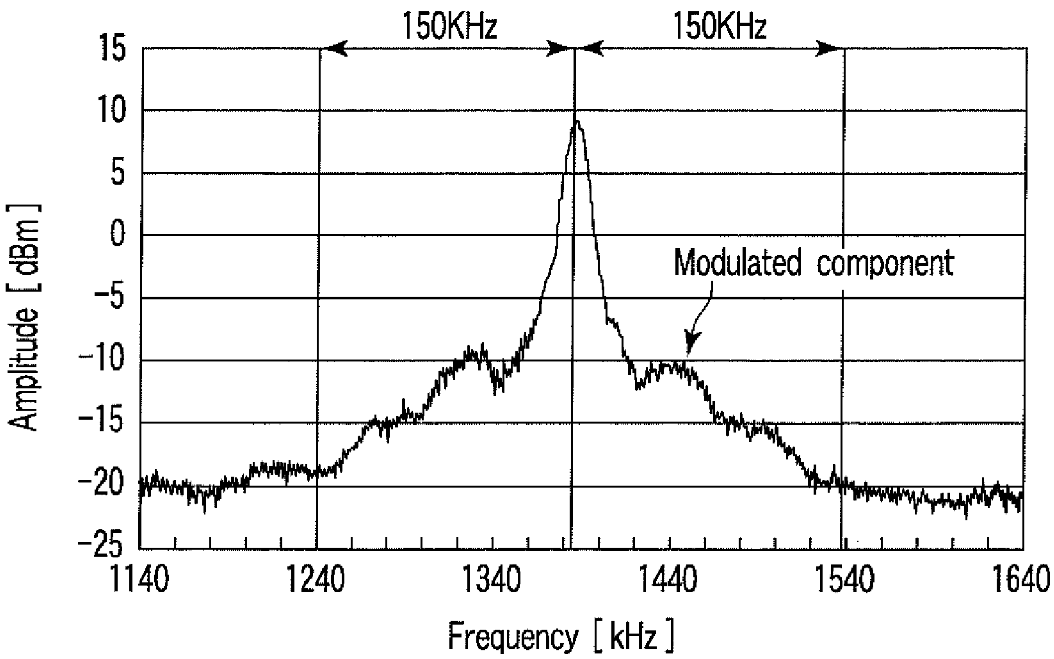


FIG.18B

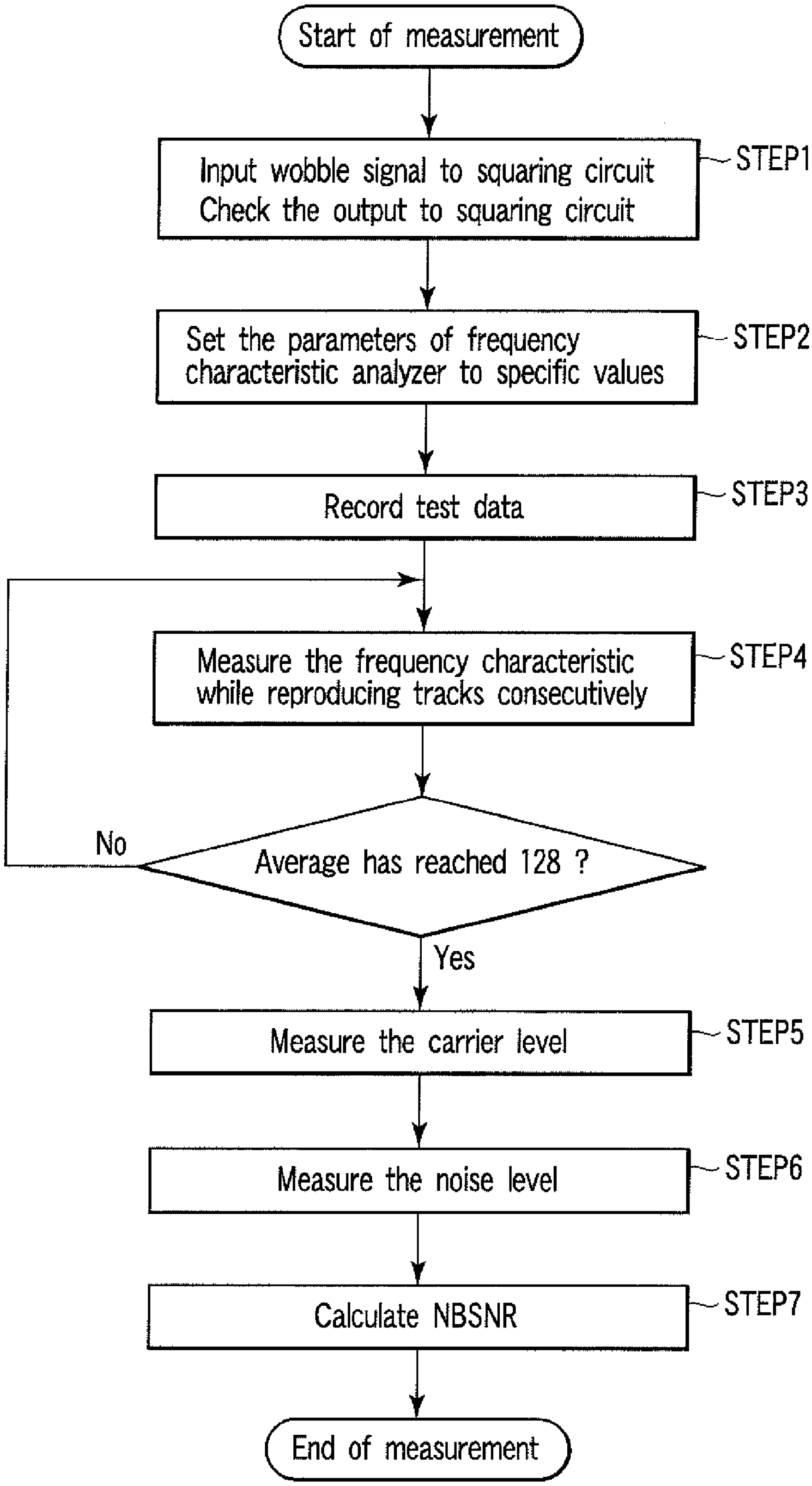
Start of measurement
Input wobble signal to squaring circuit
Check the output to squaring circuit
STEP1
Set the parameters of frequency characteristic analyzer to specific values
STEP2
Record test data
STEP3
Measure the frequency characteristic while reproducing tracks consecutively
STEP4
Average has reached 128 ?
No
Yes
Measure the carrier level
STEP5
Measure the noise level
STEP6
Calculate NBSNR
STEP7
End of measurement

FIG.19

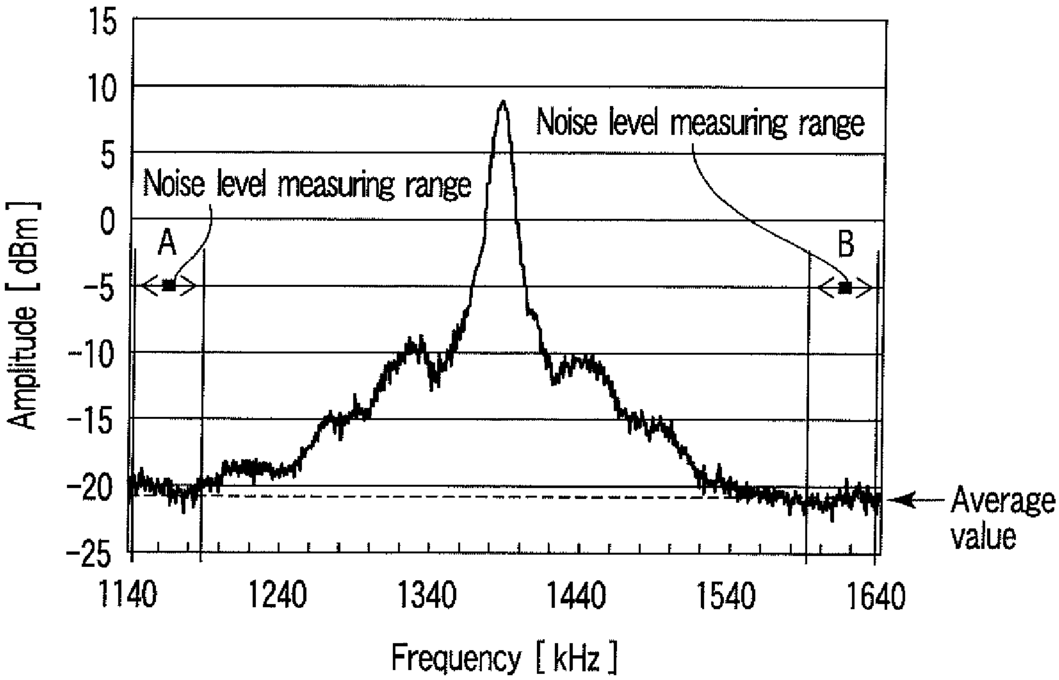
15
10
5
0
-5
-10
-15
-20
-25
Amplitude [ dBm ]
Noise level measuring range
Noise level measuring range
A
B
Average value
1140
1240
1340
1440
1540
1640
Frequency [ kHz ]

F I G. 2 0

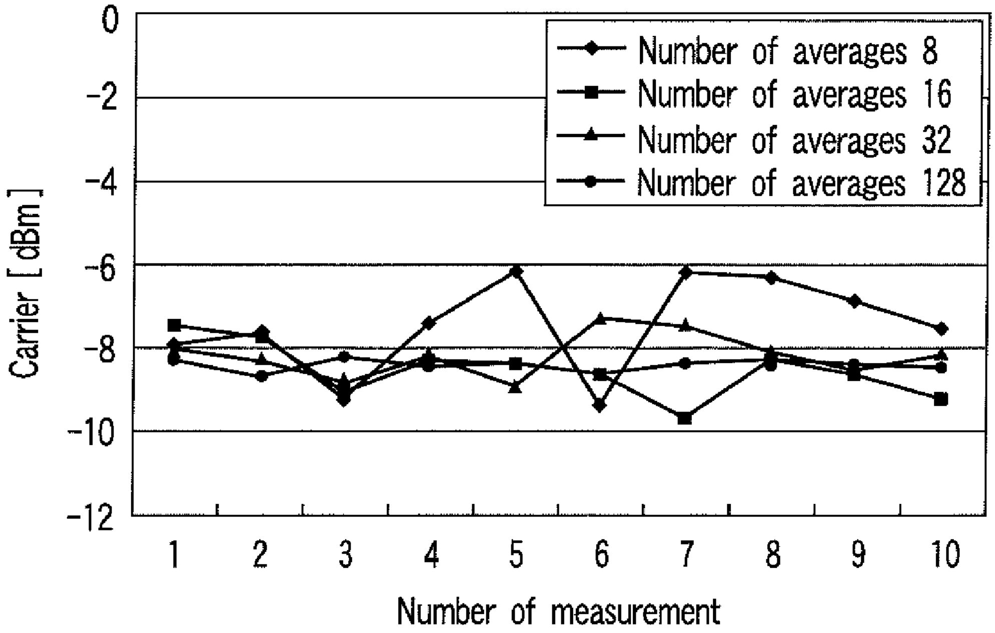


FIG.21A

| Number of averages | Average value | Peak-peak |
|---|---|---|
| Times | dB | dB |
| 8 | -7.35 | 3.2 |
| 16 | -8.43 | 2.2 |
| 32 | -8.06 | 1.6 |
| 128 | 8.33 | 0.3 |

FIG.21B

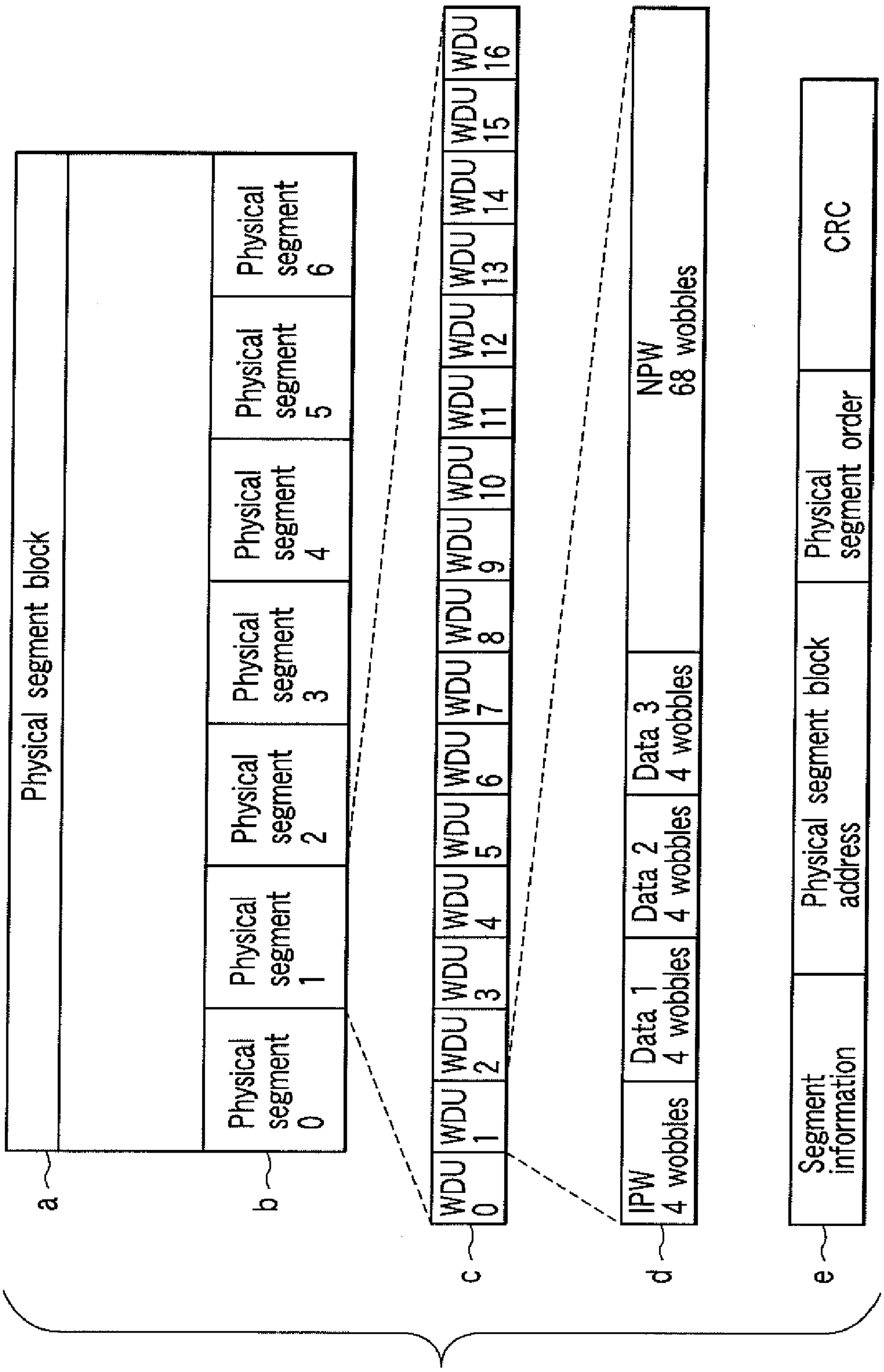
a
Physical segment block
b
Physical segment 0
Physical segment 1
Physical segment 2
Physical segment 3
Physical segment 4
Physical segment 5
Physical segment 6
c
WDU 0
WDU 1
WDU 2
WDU 3
WDU 4
WDU 5
WDU 6
WDU 7
WDU 8
WDU 9
WDU 10
WDU 11
WDU 12
WDU 13
WDU 14
WDU 15
WDU 16
d
IPW 4 wobbles
Data 1 4 wobbles
Data 2 4 wobbles
Data 3 4 wobbles
NPW 68 wobbles
e
Segment information
Physical segment block address
Physical segment order
CRC

FIG.22

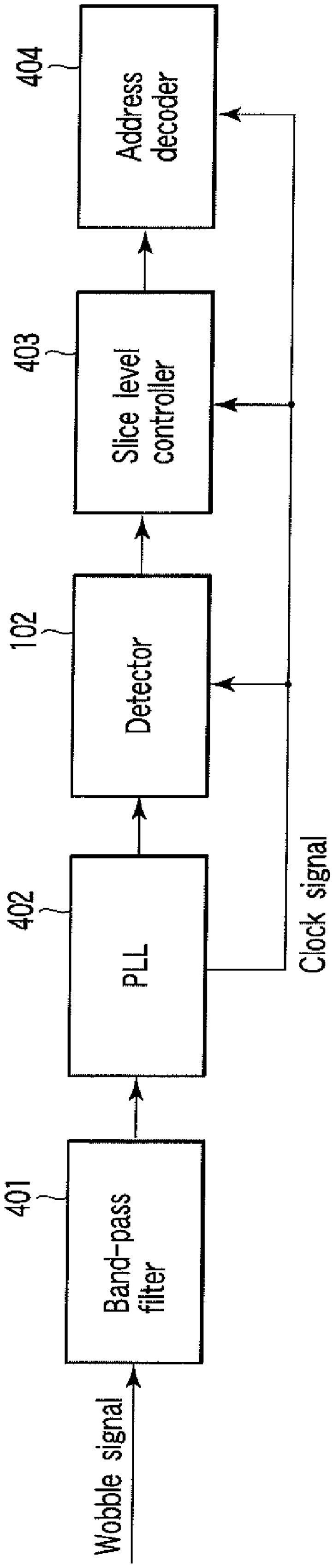
Wobble signal
401
Band-pass filter
402
PLL
Clock signal
102
Detector
403
Slice level controller
404
Address decoder

FIG. 23

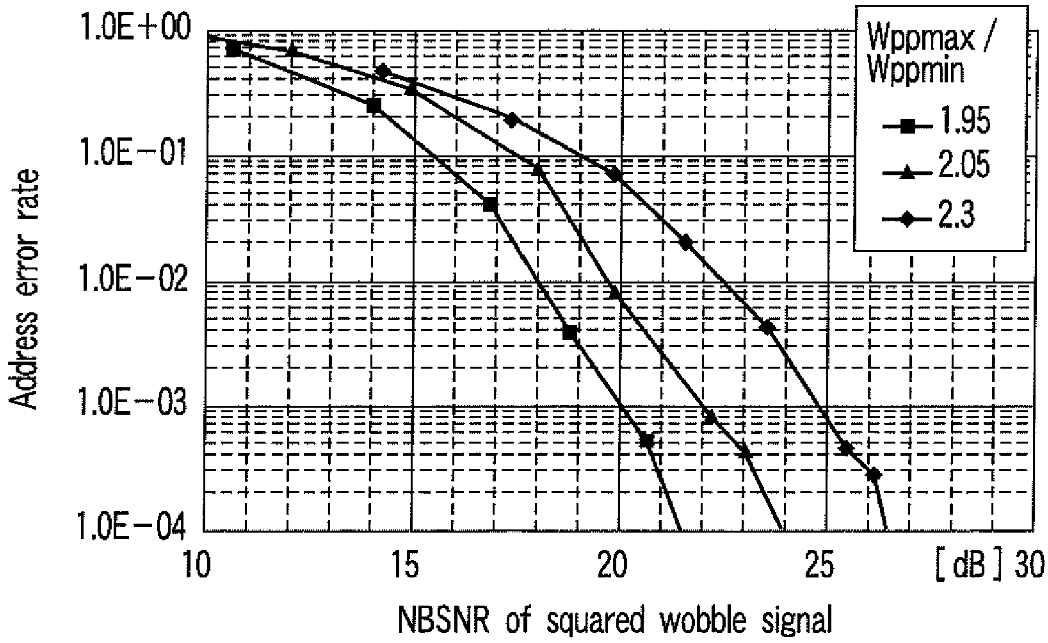
1.0E+00
1.0E−01
1.0E−02
1.0E−03
1.0E−04
Address error rate
10
15
20
25
[dB] 30
NBSNR of squared wobble signal
Wppmax / Wppmin
1.95
2.05
2.3

FIG.24

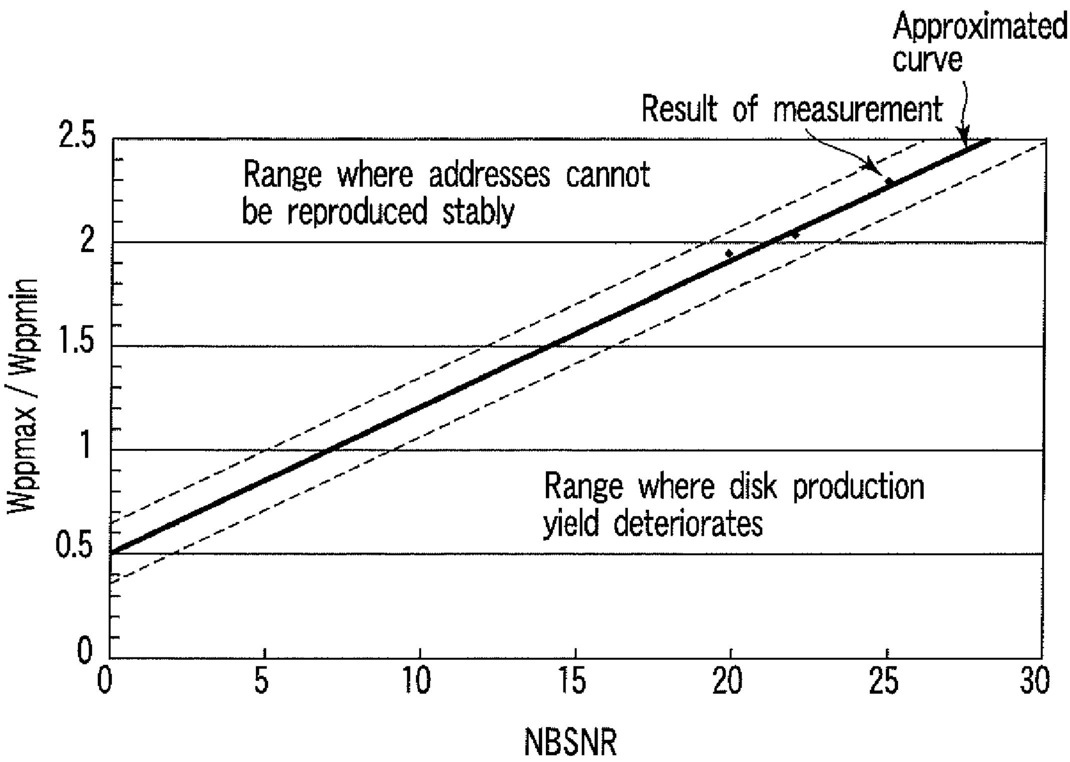
Approximated curve
Result of measurement
Range where addresses cannot be reproduced stably
Range where disk production yield deteriorates
Wppmax / Wppmin
2.5
2
1.5
1
0.5
0
0
5
10
15
20
25
30
NBSNR

FIG.25

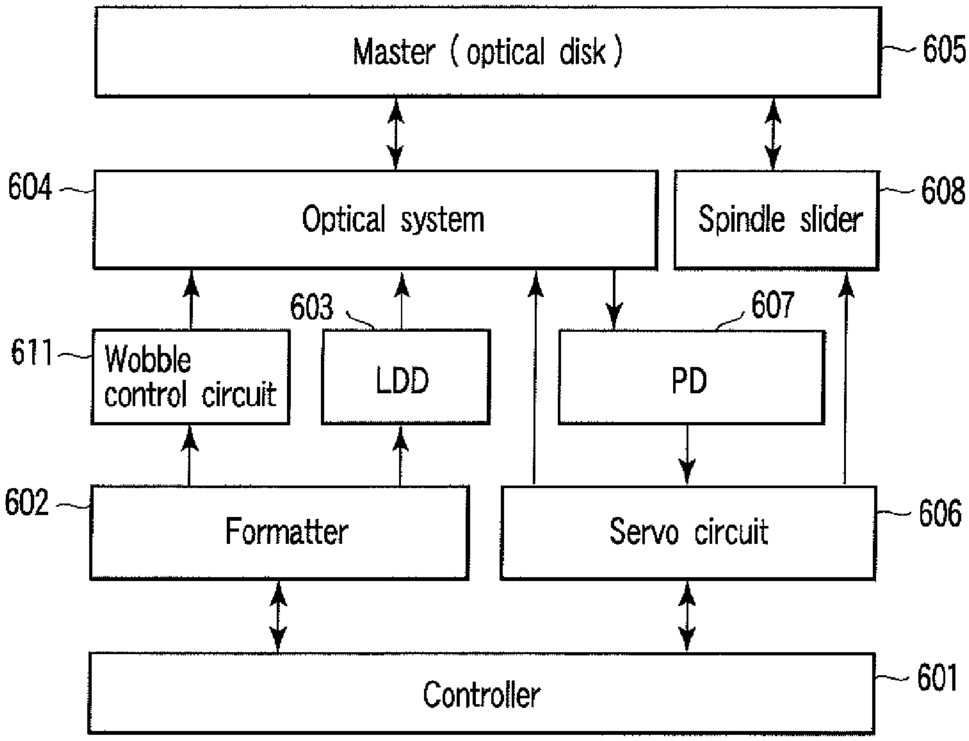
Master ( optical disk )
605
604
Optical system
Spindle slider
608
603
607
611
Wobble control circuit
LDD
PD
602
Formatter
Servo circuit
606
Controller
601

FIG.26

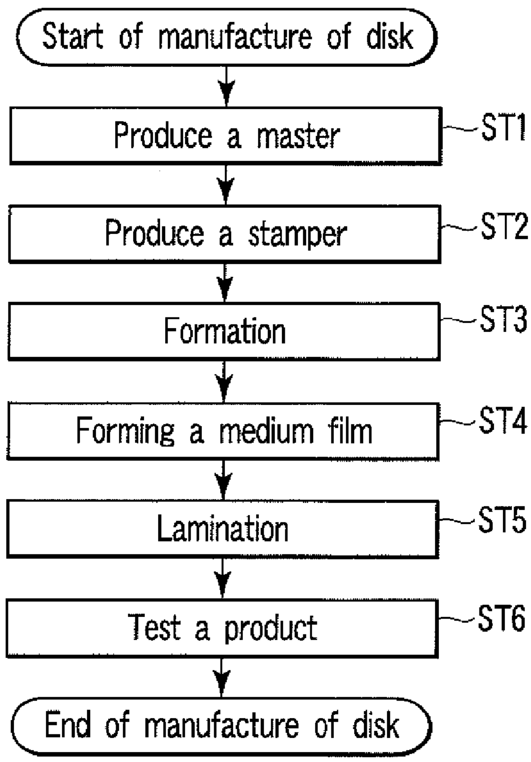
Start of manufacture of disk
Produce a master
ST1
Produce a stamper
ST2
Formation
ST3
Forming a medium film
ST4
Lamination
ST5
Test a product
ST6
End of manufacture of disk

FIG.27